# EUROPÄISCHE PATENTSCHRIFT

(11) **EP 2 118 680 B1**
(45) Veröffentlichungstag und Bekanntmachung des Hinweises auf die Patenterteilung: **18.11.2015**
(21) Anmeldenummer: 08707321.9
(22) Anmeldetag: 28.01.2008
(51) Int. Cl.: G01S 7/487, G01S 7/486, G01S 7/497, G01S 17/10

(54) **VERFAHREN UND VORRICHTUNG ZUR BESTIMMUNG EINER ENTFERNUNG ZU EINEM RÜCKSTRAHLENDEN OBJEKT**
METHOD AND DEVICE FOR DETERMINING THE DISTANCE TO A RETROREFLECTIVE OBJECT
PROCÉDÉ ET DISPOSITIF POUR DÉTERMINER UNE DISTANCE PAR RAPPORT À UN OBJET RÉTRORÉFLÉCHISSANT

(30) Priorität: 29.01.2007 DE 102007005187
(43) Veröffentlichungstag der Anmeldung: 18.11.2009
(73) Patentinhaber: Reime, Gerd, 77815 Bühl (DE)
(72) Erfinder: Reime, Gerd, 77815 Bühl (DE)
(74) Vertreter: Reinhardt, Harry
(86) Internationale Anmeldenummer: PCT/EP2008/000615
(87) Internationale Veröffentlichungsnummer: WO 2008/092611

(56) Entgegenhaltungen:
- WO-A-2005/054902
- WO-A-2007/012501
- DE-A1- 10 022 054
- DE-B3- 10 300 223
- DE-C1- 19 830 684

## Beschreibung

### Gebiet der Erfindung

Die Erfindung betrifft ein Verfahren und eine Vorrichtung zur Bestimmung einer Entfernung zu einem rückstrahlenden Objekt und ggf. des Reflexionsgrads des Objektes nach dem Oberbegriff der Ansprüche 1 und 9.

### Stand der Technik

Auf vielen Gebieten besteht der Wunsch, Veränderungen an einem Objekt wie z.B. in der Distanz zu einem Objekt zu messen oder zu erkennen, um daraus Steuerbefehle für beliebige Anordnungen abzuleiten. So öffnet sich eine Tür, wenn eine Messanordnung die Annäherung eines Objektes erkennt. Oder eine Drehtür bleibt stehen, sobald ein Hindernis erkannt wird. Veränderungen können durch die Annäherung, die Anwesenheit oder die Entfernung eines Objektes auftreten und werden von der Messvorrichtung erfasst.

Eine Möglichkeit der Distanzmessung besteht im Einsatz der Lichtlaufzeit. Dabei wird ein Laserstrahl auf das zu messende Objekt gerichtet und das reflektierte Licht gemessen. Die Verzögerung, bis das reflektierte Licht wieder am Empfänger eintrifft, ist ein Wert für die Distanz, die das Licht zurückgelegt hat. Die Lichtgeschwindigkeit beträgt rund 300.000 km/s. Ein Lichtpuls, der eine Strecke von 3 m zurückgelegt, braucht dazu ca. 10 Nanosekunden. Um bei solch kurzen Lichtstrecken noch sinnvoll die Lichtlaufzeit zu bestimmen, sind schnelle Laser bzw. schnelle Photodioden und Verstärker notwendig.

Eine Lösung nutzt die Möglichkeit, die Laufzeitinformation in einen leichter zu handhabenden Frequenzbereich zu transformieren (vgl. z.B. DE 100 22 054 A1). Dazu wird zur Bestimmung der Laufzeit das ausgesendete Licht mit einer hohen Frequenz, z. B. einige hundert MHz moduliert. Das empfangene Licht wird dann mit einer zweiten Frequenz gemischt, die nur gering gegenüber der gesendeten Frequenz verschieden ist. Als Mischprodukt bildet sich eine dritte, deutlich geringere Frequenz aus, die in der weiteren Schaltung leichter als die ursprüngliche hohe Modulationsfrequenz verarbeitet werden kann. In dieser dritten Frequenz steckt in der Phase die Information der Lichtlaufzeit. Da die dritte Frequenz meist in einen Frequenzbereich von einigen KHz heruntergemischt wird, ist die Bestimmung der Phaseninformation und somit der Lichtlaufzeit sehr einfach. Der ermittelte Differenzwert wird zur Ansteuerung eines als digitales Verzögerungsglied ausgebildeten Phasenschiebers verwendet und die Verzögerungszeit verändert, bis der Differenzwert klein wird. Der Nachteil dieses Systems besteht darin, dass nur ein bestimmter Entfernungsbereich abgedeckt wird, darüber hinaus wiederholt sich die Phaseninformation periodisch, so dass Unbestimmtheiten auftreten. Um diese Unbestimmtheiten zu umgehen, sind umfangreiche Maßnahmen wie z.B. die Modulation mit verschiedenen Frequenzen notwendig. Dieses System arbeitet grundsätzlich mit mehr als einem Lichtpuls, da sonst kein Mischvorgang erfolgen kann. In bekannten Systemen werden mindestens einige tausend Einzelimpulse ausgesandt, um mehrere Perioden des auf die dritte Frequenz heruntergemischten Signals zu erhalten.

Eine zweite Methode zur Bestimmung der Lichtlaufzeit ist die direkte Messung eines einzelnen Impulses. Dadurch werden Unbestimmtheiten ausgeschlossen, wie sie im oben beschrieben Verfahren nachteilig sind. Der Vorteil eines Einzelimpulses ist die mögliche höhere Leistung. Jedoch werden an die Erfassung eines solchen Lichtpulses im Empfänger auch wesentlich höhere Anforderungen gestellt. Um Abstände unter 15 cm zu messen, muss der Empfänger eine Reaktionszeit unter einer Nanosekunde haben. Ein perfekt ausgesendeter Lichtpuls mit einer Anstiegszeit von theoretisch Null wird jedoch durch die naturgemäß begrenzte Bandbreite im Empfänger "verschliffen". Bei einer Auswertung z.B. bei einem Schwellwert von 50% der maximalen Amplitude entsteht dadurch eine "Verzögerung", die in der Regel von der Temperatur, aber auch von der empfangenen Energie abhängig ist.

In der Praxis treten zwischen stark reflektierenden Flächen, z.B. Spiegel, und stark Licht absorbierenden Flächen, z.B. schwarzes Wildleder, durchaus Reflexionsunterschiede von z.B. 1 : 30.000 auf. Um dennoch einen brauchbaren Messwert zu generieren, wird das Empfangssignal in der Regel auf eine festgelegte Amplitude geregelt. Dieses Regeln der Amplitude kann zu einer unerwünschten Zeitverschiebung führen. Auch stellt sich das Bestimmen des exakten Empfangszeitpunktes bei sehr kleinen Signalen und daher starkem Rauschanteil als schwierig heraus. Im Übrigen sollte der empfangene Puls bei starker Reflexion die Photodiode bzw. den Vorverstärker nicht übersteuern, da die dabei auftretende Unlinearitäten sich negativ auf die Genauigkeit des Empfangszeitpunktes auswirken.

Des Weiteren wird für dieses Verfahren genauso wie für das zuerst beschriebene Verfahren eine schnelle Photodiode, in der Regel eine Avalanche-Photodiode benötigt. Wenn ferner wie im zuerst beschriebenen Verfahren nicht schon in der Photodiode das Empfangssignal mit der zweiten Frequenz gemischt wird, muss auch hier ein schneller Vorverstärker vorgesehen sein. Frequenzbereiche bis hin in den Gigahertz-Bereich sind keine Seltenheit. Hinzu kommt noch ein möglicher Einfluss von Fremdlicht, das im Extremfall einige tausend mal stärker als das reflektierte Licht des ausgesandten Pulses ist. All diese Einflüsse haben einen negativen Effekt auf die Genauigkeit der Messung.

Aus der älteren Patentanmeldung DE 10 2005 045 993.5 ist eine Lichtlaufzeitmessung bekannt, bei der einerseits das aus zwei kontinuierlich wechselseitig getakteten Lichtstrecken stammende Licht durch eine Amplitudenregelung auf gleich großen Wert im Empfänger ausgeregelt wird und in diesem ausgeregelten Zustand eine kontinuierliche Überprüfung des Empfangssignals auf Taktwechselsignale an den Übergängen zwischen den Takten erfolgt. Diese Taktwechselsignale werden dann durch Verschiebung der Phase vorzugsweise beider Lichtstrecken gegensinnig zueinander zu Null geregelt, wobei die eingestellte Phasenverschiebung der Lichtlaufzeit zu und von einem Objekt und damit der Entfernung des Objektes entspricht. Bei dieser Lösung wird bei idealem Schaltverhalten der Lichtquellen und korrekter Phasenregelung der taktsynchrone Signalanteil im Empfangsweg zu Null. Das bedeutet, es steht nur noch ein eventuelles Verstärkerrauschen am Ausgang des Photodiodenverstärkers an. Das Verfahren arbeitet ausschließlich mit kontinuierlich aufeinander folgenden Pulsen wechselseitig aus zwei verschiedenen aber elektrisch gleichen Lichtquellen und ist daher in seiner Pulsleistung aufgrund des Temperaturlimits in den verwendeten Leuchtdioden beschränkt. Ein über zumindest einen Teilabschnitt des Sendesignals oder des Referenzsignals integriertes elektrisches Signal in Folge dieser Signale, die zudem zeitlich benachbart sind, liegt nicht vor.

Nachteilig ist bei diesem Verfahren jedoch ein eventuell auftretendes, nicht exakt zu Null ausregelbares Signal, entstanden beispielsweise durch eine Asymmetrie der verwendeten Lichtquellen oder sonstiger elektronischer Bauelemente. Dieses Restsignal kann zu einem Messfehler bei starker Fremdlichteinstrahlung und gleichzeitig starker Reflexion des Sendesignals führen. Die besagte Asymmetrie entsteht z.B. wenn eine LED unterschiedliches zeitliches Verhalten beim Ein- bzw. Ausschalten aufweist oder wenn verschiedene Lichtquellen, z.B. Laser und LED gemischt eingesetzt werden.

Die WO 2005/054902 A1 zeigt eine energiesparende Schaltungsanordnung zur Auswertung eines getakteten, von einem Objekt reflektierten, optischen Signals. Die von einem Empfänger auf Grund der vom Objekt reflektierten optischen Signal empfangenen Ausgangssignale werden mit Referenzsignalimpulsen verglichen, deren Amplitude vom Ausgangssignal des Vergleichers abhängt.. Die Referenzsignalimpulse treten zeitgleich mit den vom Empfänger empfangenen Ausgangsimpulsen auf.

### Aufgabe der Erfindung

Ausgehend vom Stand der Technik liegt der vorliegenden Erfindung die Aufgabe zugrunde, ein mit Einzelpulsen hoher Energiedichte arbeitendes Verfahren zu schaffen.

Diese Aufgabe wird durch ein Verfahren und eine Vorrichtung zur Bestimmung einer Entfernung zu einem rückstrahlenden Objekt mit den Merkmalen des Anspruches 1 oder 9 gelöst.

Vorzugsweise lassen sich alle, zumindest aber viele der oben genannten Nachteile vermeiden. Damit wird eine einfachere Lösung zur Messung von Abständen ausgehend von der Distanz Null auch unter extremen Temperatur- und Fremdlichteinflüssen zur Verfügung gestellt. Unlinearitäten von Photodiode oder Vorverstärker haben keinen Einfluss auf die Messgenauigkeit. Gleichzeitig besteht die Möglichkeit der Verwendung von Bauteilen mit geringer Bandbreite. So kann an Stelle einer üblicherweise eingesetzten teuren und kleinflächigen Avalanche-Photodiode eine preiswerte großflächige Photodiode, zum Beispiel die Photodiode BPW 34 von Osram eingesetzt werden.

Die Erfindung macht sich zu nutze, das nicht ein reflektierter Puls gemessen und bewertet wird, sondern das ein möglicher Puls im Empfänger zum Verschwinden gebracht wird. Dazu wird der empfangene Puls vorzugsweise zwischen zwei ebenfalls aus einer Lichtstrecke stammenden oder elektrisch übermittelten Referenzpulsen so "eingebettet", das er nicht mehr als Einzelpuls erkennbar ist. Es genügt jedoch auch der Vergleich mit einem Referenzpuls. Die Beeinflussung des Startzeitpunktes, die den Lichtpuls zum" Verschwinden" bringt, entspricht dann der Laufzeit des Lichtimpulses von der Sendelichtquelle zum reflektierenden Objekt und wieder zurück zum Empfänger und stellt somit ein Wert für die Entfernung dar.

Bedarfsweise können auch die Pulse vor und nach dem eigentlichen Sendesignal erfasst werden und aus ihren Amplituden ein Mittelwert gebildet werden, der dem Anteil des Referenzsignals entspricht und der insofern mit dem Amplitudenwert aus dem Lichtsignal verglichen wird.

In der Praxis hat sich gezeigt, dass die Taktwechselsignale allein unter Umständen noch ein Fehlerpotential dadurch enthalten, dass Anstiegs- und Abfallzeiten der Leuchtdioden enthalten sind. Wird jedoch ein Taktwechselsignal allein verwendet und einem von der Lichtlaufzeit unabhängigen Amplitudenwert gegenübergestellt, lassen sich diese Fehler verringern, wenn auch eine eventuelle Temperaturdrift dann einen geringfügig stärkeren Einfluss haben kann. Vorzugsweise wird dafür der durch die Amplitudenregelung eingeregelte Amplitudenwert am Vorverstärker als Referenz verwendet. Wird nämlich ein Taktwechselsignal so geregelt bzw. ausgelöscht, dass es diesem Referenzwert entspricht, ist dies auf Grund des taktsynchronen Auftreten der Taktwechselsignale einem Ausregeln der beiden Taktwechselsignale auf gleiche Größe gleichzusetzen. Alternativ oder ergänzend kann ein Restfehler durch eine weitere Regelung vollständig beseitigt werden

Als Sender können preiswerte LEDs mit durchaus geringerer Anstiegszeit gegenüber den üblicherweise verwendeten Laserdioden eingesetzt werden, ohne dass darunter die Genauigkeit der Messung leidet. Auch wird keine "schnelle" Elektronik benötigt. Bei einer Integration der Elektronik kann dies ausschließlich in der relativ langsamen C-MOS Technologie geschehen.

In den Bauteilen, insbesondere den Leuchtdioden möglicherweise auftretende Asymmetrien bzw. Toleranzen werden ausgeregelt und haben keinen Einfluss auf die Messgenauigkeit, auch nicht unter hohem Fremdlichteinfluss.

Weitere Vorteile ergeben sich aus den Unteransprüchen und der nachfolgenden Beschreibung.

### Kurzbeschreibung der Figuren

Im Folgenden wird die Erfindung anhand der beigefügten Figuren näher erläutert. Es zeigen:
- Fig. 1: eine schematische Darstellung eines Schaltbilds der Messanordnung,
- Fig. 2: Signalverläufe über der Zeit,
- Fig. 3: Signalverläufe über der Zeit bei unterschiedlichen Lichtquellen als Sendelichtquelle und als Referenzlichtquelle,
- Fig. 4: ein von Fremdlicht beeinflusstes Signal,
- Fig. 5: eine schematische Darstellung einer Taktverschiebung im Picosekundenbereich,
- Fig. 6: Taktverläufe bei einer Ausgestaltung gemäß Fig. 5.

Ausführliche Beschreibung bevorzugter Ausführungsbeispiele

Die Erfindung wird jetzt beispielhaft unter bezug auf die beigefügten Zeichnungen näher erläutert. Allerdings handelt es sich bei den Ausführungsbeispielen nur um Beispiele, die nicht das erfinderische Konzept auf eine bestimmte Anordnung beschränken sollen. Bevor die Erfindung im Detail beschrieben wird, ist darauf hinzuweisen, dass sie nicht auf die jeweiligen Bauteile der Vorrichtung sowie die jeweiligen Verfahrensschritte beschränkt ist, da diese Bauteile und Verfahren variieren können. Die hier verwendeten Begriffe sind lediglich dafür bestimmt, besondere Ausführungsformen zu beschreiben und werden nicht einschränkend verwendet. Wenn zudem in der Beschreibung oder in den Ansprüchen die Einzahl oder unbestimmte Artikel verwendet werden, bezieht sich dies auch auf die Mehrzahl dieser Elemente, solange nicht der Gesamtzusammenhang eindeutig etwas Anderes deutlich macht.

Eine Taktsteuerung 1.1, z.B. ein entsprechend programmierter Mikrokontroller, liefert Impulse an mindestens eine Sendelichtquelle 1.8 und eine zweite, in unmittelbarer Nähe des Empfängers befindliche zweite Lichtquelle 1.9, die als Referenzlichtquelle dient. Die Lichtquellen können Leuchtdioden oder Laserdioden oder wahlweise beide Typen gemischt sein. Wenigstens eine der beiden Lichtquellen ist in ihrer Phase und Amplitude um einen bestimmbaren Betrag regelbar. Die Sendelichtquelle 1.8 sendet z.B. alle 10 ms einen Impuls von 100 ns aus. Dieser durchläuft die Lichtstrecke 1.24 und 1.25 zum Objekt und vom Objekt 1.26 zu einem Empfänger wie z.B. der Photodiode 1.10 und würde ohne weitere Maßnahmen als Einzelpuls im Verstärker 1.11 erscheinen. Zur Detektion des Eintreffzeitpunktes würden nun im Stand der Technik die oben genannten Probleme auftreten.

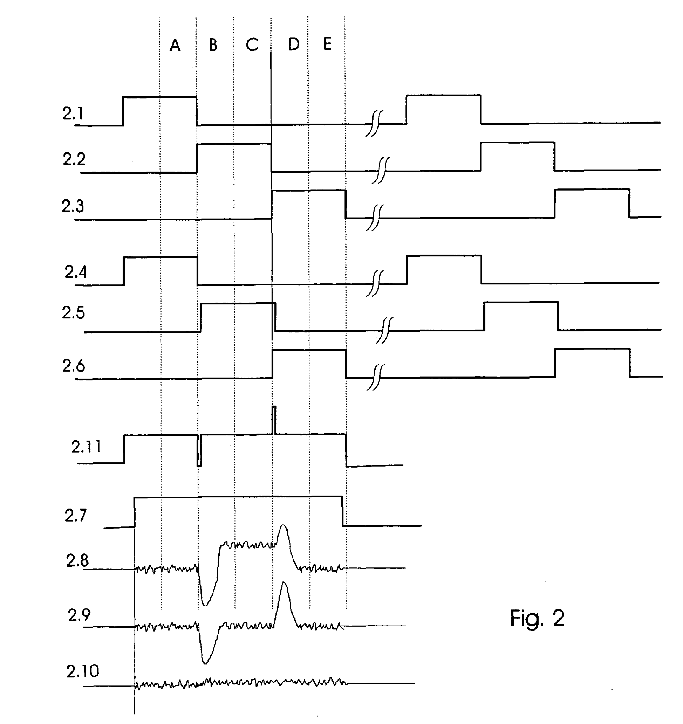

Darum wird in der Erfindung zuerst ein Referenzpuls 2.1 gemäß Fig. 2 ausgesandt. Dieser wird aus der zweiten Lichtquelle 1.9 direkt auf kurzem Wege in die Photodiode 1.10 geleitet. Nach dem Ende des Referenzpulses 2.1 schließt zunächst der eigentliche Sendepuls 2.2 (Fig. 2) der Sendelichtquelle 1.8 an. Nach dem Ende des Sendepulses 2.2 schließt sich vorzugsweise ein weiterer Referenzpuls 2.3 ausgesandt von der zweiten Lichtquelle 1.9 an. Damit ist der Sendepuls 2.2 zwischen zwei Referenzpulse eingebettet. Das beschriebene Verfahren arbeitet aber auch mit nur einem Referenzpuls. Oder die Referenzpulse können auch unmittelbar als elektrische Referenzsignale an den Vorverstärker 1.10 oder die nachfolgenden Regelungen übermittelt werden. Schnell sich ändernde Fremdlichteinflüsse können dann jedoch zu kurzzeitigen Messwertfehlern führen.

Das Licht der Sendelichtquelle 1.8 und das Licht der Referenzlichtquelle 1.9 treffen zunächst mit unterschiedlicher Intensität an der Photodiode 1.10 ein. Das bedeutet, der Sendepuls 2.2 wird entweder größer (Empfangssignal 2.8 in Fig. 2 mit nicht ausgeregelter Phase und Amplitude) oder kleiner als die Referenzpulse sein. Gleichzeitig entsteht ein zeitlicher Versatz durch den längeren Weg über die Lichtstrecken 1.24 und 1.25 zu und vom reflektierenden Objekt 1.26. Zudem setzt der Empfänger das Empfangssignal also das empfangene Sendesignal 2.2 und ggf. das wenigstens eine empfangene Referenzsignal 2.1, 2.3 in ein elektrisches Sendesignal 2.5 bzw. ein elektrisches Referenzsignal 2.4, 2.6 um. Das elektrische Referenzsignal kann alternativ auch unmittelbar ohne den Umweg über eine Lichtstrecke in die Schaltung und nachfolgende Regelung eingebracht werden.

Zunächst wird der Photodiodenverstärker, der Vorverstärker 1.11 während der Zeitdauer aller Pulse durch Steuerleitung 1.30 aktiv geschaltet. Durch diese Maßnahme wird nur der zeitliche Bereich betrachtet, bei dem die Lichtquellen aktiv sind. Verfälschungen des Empfangssignals durch den Lichtanstieg beim ersten Referenzpuls 2.1 und Lichtabfall am Ende des zweiten Referenzpulses 2.3 werden dadurch ausgeschlossen.

Eine Zerlegung des Empfangssignals gemäß Fig. 2 in die Taktabschnitte A,B,C,D,E zeigt einerseits zwei Bereiche B, D mit Taktwechselsignalen zwischen benachbarten Pulsen 2.1, 2.2 bzw. 2.2, 2.3 und andererseits die Bereiche A, C, E, bei denen das Taktwechselsignal abgeklungen ist und nur noch reine Amplitudeninformation ansteht.

Mit den Signalwegschaltern 1.17 und 1.18 werden nun als erstes die Amplitudenunterschiede in den Bereichen A, E mit dem Bereich C verglichen. Dazu schaltet der Signalwegschalter 1.17 den Bereich A, E auf einen ersten Eingang 1.19a eines Vergleichers 1.19. Der Bereich C wird über Invertierstufe 1.12 invertiert zu den Bereichen A+E mit Signalwegschalter 1.18 auf den gleichen Eingang 1.19a des Vergleichers 1.19 gegeben. Der zweite Eingang 1.19b des Vergleichers 1.19 liegt an einer, durch zwei gleiche Widerstände 1.13 gebildeten Mittelwertbildung aus dem direktem und dem invertiertem Signal des Vorverstärkers 1.11. Da sich beide gleich großen Signale wechselspannungsmäßig aufheben, steht somit am Summenpunkt zwischen beiden Widerständen ein reiner Gleichspannungsanteil an. Lediglich eine Gleichspannungsdrift der Ausgangsspannung vom Vorverstärker 1.11 und der Invertierstufe 1.12 teilt sich dem Summenpunkt und somit dem zweiten Eingang 1.19b des Vergleichers mit. Durch diese Maßnahme hebt sich der Einfluss einer temperaturbedingten Gleichspannungsdrift des Verstärkers 1.11 und des Invertierers 1.12 im Vergleicher 1.19 auf.

Der Vergleicher 1.19 selbst kann als hochverstärkender Operationsverstärker mit Integration 1.31 des Eingangssignals ausgeführt werden.

Aufgabe dieses Vergleichers 1.19 ist es, eine noch so kleine Differenz der Eingangswerte zu detektieren und am Ausgang 1.19c als Regelwert 1.29 zur Verfügung zu stellen. Dieser Regelwert kann für die Erfassung von Änderungen an oder infolge des Objekts ausgewertet werden und dient damit z.B. zur Erfassung von Position, Lage und Bewegung des Objekts 1.26.

Die Beschaltungen 1.31 der Vergleicher 1.16, 1.19 und 1.22 entsprechen einer integrierenden "Sample and Hold" Funktion. Für den Vergleicher 1.19 z.B. bedeutet dies, dass der Mittelwert des mit dem Signalwegschalter 1.17 bzw. 1.18 abgetasteten Signals bis zum nächsten Taktzyklus gespeichert wird.

Somit werden im Vergleicher 1.19 die Amplitudenwerte der Referenzpulse 2.1 und 2.3 mit den Amplitudenwerten des Sendepulses 2.2 verglichen. Ein Unterschied zwischen beiden Werten führt zu einer Regelspannung 1.29 am Ausgang 1.19c des Vergleichers 1.19. Mit dieser Regelspannung wird mindestens eine der beiden Lichtquellen 1.8 und 1.9 in ihrer Amplitude so lange nachgeregelt, bis kein Unterschied der Eingangsspannungen am Vergleicher 1.19 anliegt oder zumindest minimal wird. Im Ausführungsbeispiel wird die Referenzlichtquelle 1.9 über die Amplitudenregelung 1.6 direkt geregelt, während die Sendelichtquelle 1.8 über die Amplitudenregelung 1.7 und den Inverter 1.12 invers geregelt wird.

Bei schwacher Reflexion am Objekt 1.26 ist die Sendestufe z.B. auf hohe Leistung geregelt, während die Referenzlichtquelle 1.9 so weit abgeregelt wird, bis im Empfänger 1.10 die Referenzpulse 2.1, 2.3 gleich groß wie der Sendepuls 2.2 erscheinen. Lassen wir die Zeitverschiebung durch die Lichtstrecken 1.24 und 1.25 außer Betracht, ist der Gesamt-Sendepuls im Empfangssignal, bestehend aus erstem Referenzsignal 2.1, dem Sendesignal 2.2 und dem zweiten Referenzsignal 2.3 nicht als solcher sichtbar. Er ist sozusagen "verschwunden".

Durch diese Maßnahme ist zwar der Sendepuls so in eine zweite Signalumgebung eingebettet, dass er nicht mehr sichtbar ist, jedoch soll im Falle einer Lichtlaufzeitmessung die Zeit bestimmt werden, die dieser Puls auf den Lichtstrecken 1.24 und 1.25 zurückgelegt hat. Angenommen, die Lichtstrecke 1.24 ist 15 cm lang, hin und zurück also 30 cm. Bei einer Lichtlaufzeit von gerundet 300.000 km/s braucht der Puls eine Nanosekunde. Der Puls kommt im Empfänger als mit einer "Verspätung" von einer Nanosekunde an.

Diesen Zustand zeigt in Fig.2 die Darstellung des Empfangssignals 2.4 des ersten Referenzpulses 2.1, des Empfangssignals 2.5 des um eine Nanosekunde verzögert eintreffenden Sendepulses 2.2 und des Empfangssignals 2.6 des zweiten Referenzpulses 2.3. Zeichnerisch ist die Verzögerung überhöht dargestellt, in der Praxis ist im Verhältnis zur Sendepulslänge eine Verzögerung von 1 Nanosekunde kaum sichtbar. Jedoch wird zwischen dem Empfangssignal 2.4 des ersten Referenzpuls 2.1 und dem Empfangssignal 2.5 des eintreffenden Sendepulses 2.2 eine kurze Lücke von einer Nanosekunde entstehen, in der kein Licht einer der beiden Lichtquellen 1.8 und 1.9 in die Photodiode 1.10 trifft. Analog dazu wird es am Übergang des Empfangssignal 2.5 des Sendepulses 2.2 zum Empfangssignal 2.6 des Referenzpulses 2.3 eine Überlappung von einer Nanosekunde beider Pulse geben. Das bedeutet: im empfangenem Signal erscheint am Übergang zwischen erstem Referenzpuls 2.1 und Sendepuls 2.2 ein kurzer negativer Puls von einer Nanosekunde und am Übergang vom Sendepuls 2.2 zum zweiten Referenzpuls 2.3 ein ebenso langer positiver Puls gemäß 2.11.

Eine "langsame" Photodiode und ein "langsamer" Vorverstärker können diesen kurzen Puls nicht mehr auflösen. Da zusätzlich noch die Anstiegszeiten bei handelsüblichen Leuchtdioden und Treiberstufen in C-MOS Technologie durchaus länger als eine Nanosekunde sind, würde im besten Falle ein stark verschliffener und in seiner Amplitude schlecht bestimmbarer Puls am Ausgang des Vorverstärkers 1.11 erscheinen.

Wird aber nach der hier beschriebenen Methode die Laufzeit des Lichtsignals bestimmt, ist man nicht mehr auf eine genaue Messung des empfangenen Lichtpulses angewiesen. Vielmehr ist es sogar von Vorteil, wenn der empfangene Puls durch eine Begrenzung der Photodioden- bzw. Vorverstärkerbandbreite "verschliffen" wird. Die Energie des Pulses geht beim Verschleifen, d.h. bei Durchgang durch einen Verstärker mit reduzierter Bandbreite, nicht verloren. Aus einem Puls von einer Nanosekunde und einer Pulshöhe von z.B. 10 mV wird dann z.B. eine Pulshöhe von 10 Mikrovolt, jedoch mit einer Länge von 1000 Nanosekunden. Dieser "kleine", aber lange Puls lässt sich nun problemlos mit C-MOS Technologie verstärken. Bei einer Verstärkung von 80dB ergibt sich dann eine Pulshöhe von 100 mV. Der Photodiodenverstärker 1.11 kann auch als hochverstärkender Begrenzerverstärker ausgeführt sein. Die zeitlich präzise Zuordnung des Empfangspulses 2.5 geht zwar verloren, wird aber in dem hier beschrieben Verfahren auch nicht benötigt.

Das Signal 2.9 in Fig. 2 zeigt das in der Amplitude, aber noch nicht in der Zeit ausgeregelte Empfangsignal am Ausgang des Vorverstärkers 1.11. Aus den sehr kurzen Pulsen am Übergang zwischen Sende- und Referenzpulsen ist nun ein langer und leicht weiter zu verarbeitender Puls geworden. In einem weiteren Schritt wird nun das Empfangssignal 2.9 auf diese Pulse hin untersucht. Dazu werden mit dem Signalwegschalter 1.14 und 1.15 die Amplitudenunterschiede in den Bereichen B und D verglichen. Der Signalwegschalter 1.14 schaltet während des Bereiches B auf einen ersten Eingang 1.16a eines Vergleichers 1.16 . Der Bereich D wird invertiert zu dem Bereich B mit Signalwegschalter 1.15 auf den gleichen Eingang 1.16a des Vergleichers 1.16 gegeben.

Der zweite Eingang 1.16b des Vergleichers 1.16 liegt an einer durch zwei gleiche Widerstände 1.13 gebildeten Mittelwertbildung aus dem direktem und dem invertiertem Signal des Vorverstärkers 1.11. Da sich beide gleich großen Signale wechselspannungsmäßig aufheben, steht somit am Summenpunkt zwischen beiden Widerständen ein reiner Gleichspannungsanteil an. Lediglich eine Gleichspannungsdrift der Ausgangsspannung von Vorverstärker 1.11 und Invertierstufe 1.12 teilt sich dem Summenpunkt und somit dem zweiten Eingang 1.16b des Vergleichers 1.16 mit. Durch diese Maßnahme hebt sich der Einfluss einer temperaturbedingten Gleichspannungsdrift des Verstärkers 1.11 und des Invertierers 1.12 im Vergleicher 1.16 auf. Der Vergleicher kann identisch wie der Vergleicher 1.19 ausgeführt sein, also als hochverstärkender Operationsverstärker mit Integration des Eingangssignals. Die Ausführung der hier beschriebenen Vergleicher kann auch andersartig sein, wesentlich ist nur, das sie zwei Signale mit einander vergleichen und dabei eine hohe Verstärkung aufweisen. Ein Unterschied zwischen beiden Eingangswerten des Vergleichers 1.16 führt zu einer Regelspannung 1.27 am Ausgang des Vergleichers 1.16.

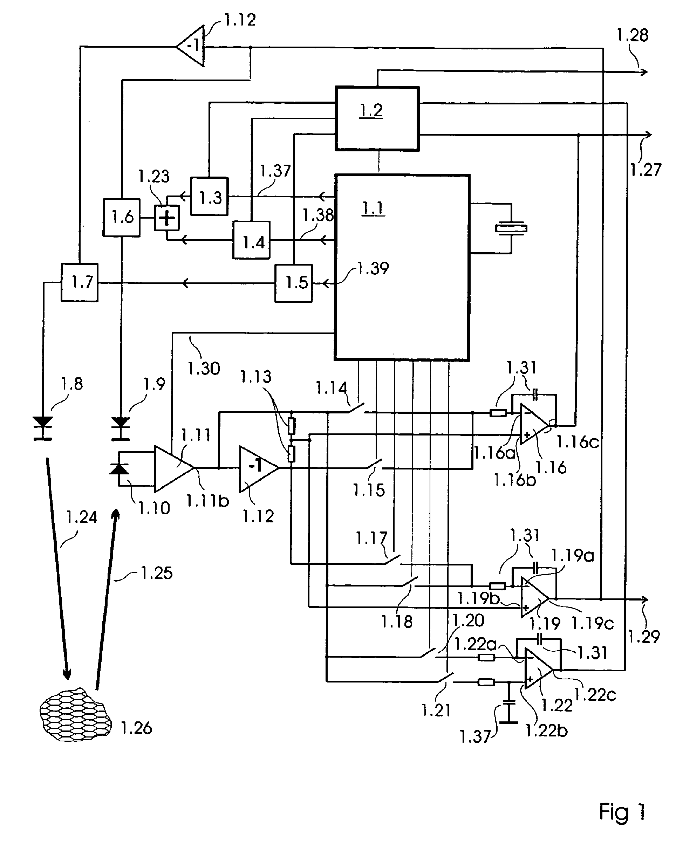

Im Ausführungsbeispiel werden die Informationen aus den Abschnitten B und D unmittelbar miteinander verglichen werden, wie dies auch in Figur 1 dargestellt ist. In der Praxis hat sich jedoch gezeigt, dass Eigenschaften der Leuchtdioden das Ergebnis verfälschen können. Eine Möglichkeit, diesen Einfluss zu verringern, besteht darin die Amplitude nur eines Taktwechselsignals gegenüber der Amplitude eines im ausgeregelten Zustand der Amplitudenregelung am Ausgang 1.11 b des Vorverstärkers 1.19 anstehenden Referenzwerts auszulöschen bzw. zu minimieren.

Die Regelspannung 1.27 wird an eine Regelspannungsverarbeitung 1.2 gegeben. In Abhängigkeit von der Regelspannung 1.27 verschiebt diese Stufe mit Hilfe der analogen oder digitalen Phasenregelungen 1.3, 1.4, 1.5 die Phasen der Referenzpulse 2.1, 2.3 und des Sendepulses 2.2 so zueinander, das die am Vorverstärker 1.11 anliegenden Pulse in den Zeitabschnitten B und D verschwinden.

Es reicht aus, wenn nur der Sendepuls 2.2 oder auch nur die Referenzpulse 2.1 und/oder 2.3 in der Zeit verschoben werden, jedoch können selbstverständlich auch Sende und Referenzpulse zueinander verschoben werden. Im beschriebenem Beispiel von einem Abstand des reflektierenden Objektes 1.26 in 15 cm Entfernung müssen die Referenzpulse und der Sendeimpuls um genau eine Nanosekunde zueinander verschoben werden. Dann sind die Taktwechselpulse des Empfangssignals 2.9 gemäß Signal 2.10 ausgelöscht und am Ausgang 1.11 b des Verstärkers 1.11 liegt nur noch das Verstärkerrauschen ohne irgendwelche taktsynchronen Anteile an. In der Additionsstufe 1.23 wird der erste und der zweite Referenzpuls zusammengefasst und der Amplitudenregelung 1.6 zugeführt.

In der Regelspannung 1.27 steckt dann die Information der Lichtlaufzeit. Der Wert der Lichtlaufzeit kann aber auch als digitaler Wert erhalten werden.

Eine Bestimmung der Lichtlaufzeit nach dem bis hierhin beschriebenem Verfahren hat den Vorteil sehr hoher Detektionsempfindlichkeit bei einem sehr hohem Dynamikbereich der Reflexion. Das beschriebene Verfahren arbeitet ggf. auch mit nur einem Referenzpuls. Schnell sich ändernden Fremdlichteinflüsse können dann jedoch zu kurzzeitigen Messwertfehlern führen.

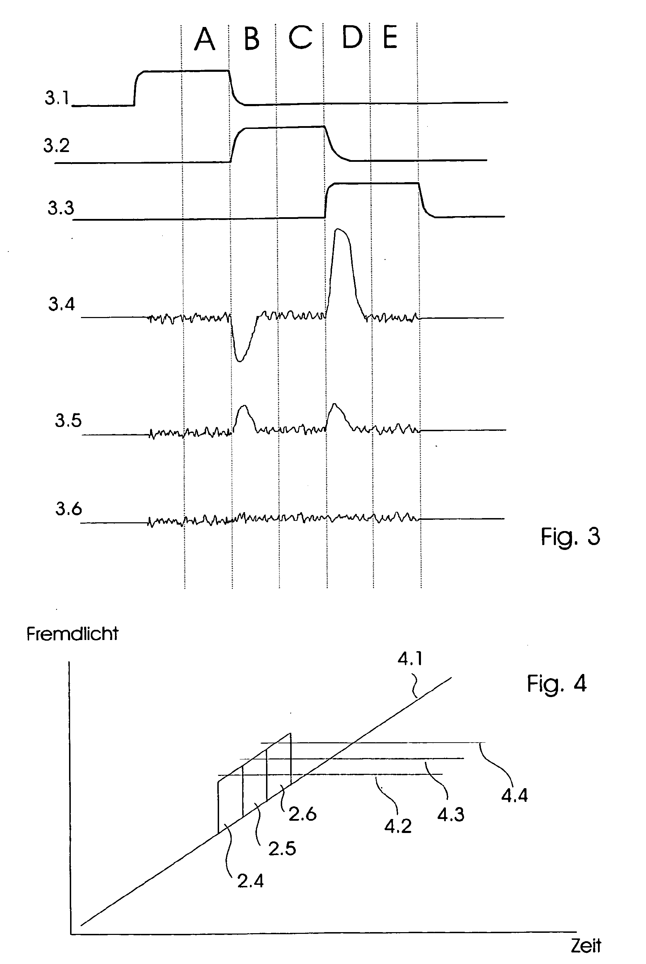

Fig. 4 zeigt den Vorteil von zwei Referenzpulsen. Bei einem schnellen Anstieg des Fremdlichtanteiles 4.1 werden auch die Empfangssignale 2.4, 2.6 der Referenzpulse und das Empfangssignal 2.5 des Sendepulses mit beeinflusst. Da in der Integrationsbeschaltung 1.31 der Mittelwert 4.2 für den ersten Referenzpuls, der Mittelwert 4.3 für den Sendepuls, und der Mittelwert 4.4 für den zweiten Referenzpuls gebildet werden, ist der resultierende gemeinsame Mittelwert der Referenzpulse 2.4 und 2.6 gleich dem Mittelwert 4.3 des Sendepulses. Schnelle Fremdlichtänderungen haben somit keinen Einfluss auf die Messung.

Selbstverständlich können auch andere Pulsfolgen als im Ausführungsbeispiel dargestellt, verwendet werden. So kann auch der z.B. nur eine Referenzpuls zwischen zwei Sendepulse eingebettet werden.

Bei der Verwendung von Lichtquellen mit unterschiedlichen Reaktionszeiten kann das Empfangssignal in den Zeitabschnitten B und D nicht präzise ausgelöscht werden. Dieser Unterschied in den Anstiegs- und Abfallzeiten entsteht z.B. bei Leuchtdioden verschiedener Chargen oder bei Verwendung einer Laserdiode als Sender und aus Kostengründen einer LED als Referenzlichtquelle. Fig. 3 stellt diesen Zustand in den Signalen 3.1, 3.2 und 3.3 dar. Das Ausgangssignal 3.4 des Vorverstärkers 1.11 zeigt ohne Zeitkorrektur der Referenz- oder des Sendepulses einen asymmetrischen Verlauf. Nach Ausregelung mittels Vergleicher 1.16 ergibt sich zwar die gewünschte Symmetrie, jedoch bleibt ein Restfehler in den Taktbereichen B und D vorhanden.

Bei starker Reflexion (Retroreflektor in unmittelbarer Nähe des Sensors) und einem starken Fremdlichteinfluss (Sonnenlicht mit 100 klx direkt in die Photodiode) können auf Grund der dann entstehenden Unlinearitäten in der Photodiode und dem nicht vollständig ausgelöschtem Signal Messfehler entstehen. Um dies zu verhindern, werden mittels eines weiteren Vergleichers 1.22 die Taktabschnitte A,C und E mit dem Taktabschnitten B und D verglichen. Dazu schaltet der Signalwegschalter 1.20 die Taktabschnitte A,C,E auf einen Eingang 1.22a des Vergleichers 1.22, während der Signalwegschalter 1.21 die Taktabschnitte B,D auf den anderen Eingang 1.22b schaltet. Der Ausgang 1.22c des Vergleichers 1.22 ist mit der Regelspannungsverarbeitung 1.2 verbunden.

Detektiert der Vergleicher 1.22 einen Unterschied in den Taktabschnitten A,C,E gegenüber B,D, so wirkt die Regelspannungsverarbeitung 1.2 so auf die Phasenregelung ein, das z.B. der Sendepuls so lange verlängert oder verkürzt wird, bis der Restfehler 3.5 vollkommen ausgelöscht wird und wieder nur das Verstärkerrauschen ohne taktsynchrone Anteile am Photodiodenverstärker 1.11 ansteht. Dabei ist es gleichgültig, ob der Sendepuls oder die Referenzpulse in der zeitlichen Länge beeinflusst oder die Referenzpulse in ihrer Lage verschoben werden. Alle drei Regelungen, also Amplitude, Zeitverschiebung und Kompensation der Reaktionszeit können gleichzeitig aktiv sein, ohne sich gegenseitig zu stören.

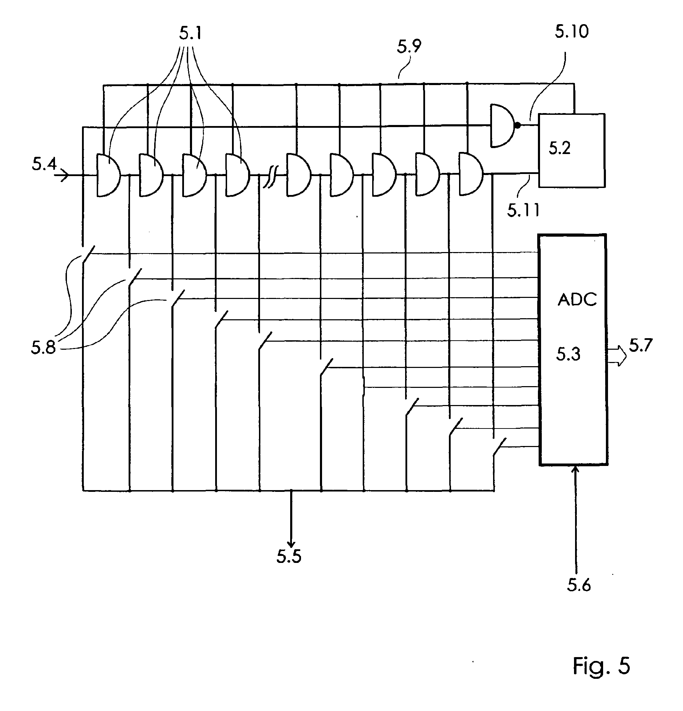

Um einen digitalen Wert für die Lichtlaufzeit zu erhalten, kann dafür eine digitale Signalverzögerung eingesetzt werden. Eine gewünschte Auflösung von z.B. 1.5 mm bedeutet dann eine Schrittweite von 10 Picosekunden. Entsprechend dazu müsste dann die Taktrate eines möglichen Mikroprozessors theoretisch 100 Gigahertz betragen, eine Taktfrequenz die z.Zt. noch nicht möglich ist. Eine Lösung zur Taktverschiebung im Picosekundenbereich zeigt Fig. 5. Ein Takt 5.4, der quarzgenau aus dem Taktgenerator 1.1 entnommen werden kann, wird durch eine bestimmte Anzahl Gatter 5.1 in einem IC geschickt. Jedes der durchlaufenen Gatter verzögert den Takt um eine kurze Zeit, z.B. 10 Picosekunden. Mittels der Schalter 5.8 kann ein beliebiger Abgriff zwischen den Gattern ausgewählt werden. Ein Analog / Digitalwandler 5.3 bekommt die Regelspannung vom Vergleicher 1.16. Dieser wählt je nach Regelspannung einen entsprechenden Schalter aus. Am Ausgang 5.7 kann dann z.B. der binäre Wert für die eingestellte Verzögerung abgegriffen werden.

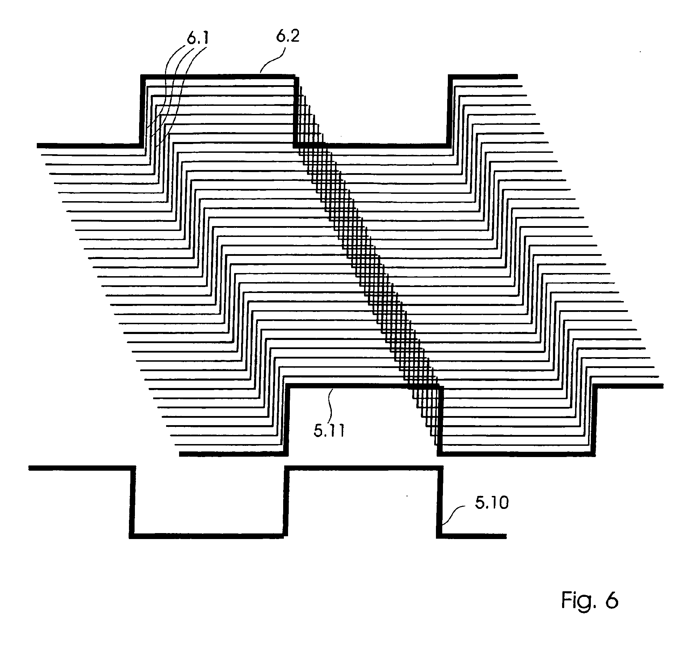

Die Verzögerungszeit eines Gatters ist Temperatur- und Versorgungsspannungs-abhängig. Um dieses Problem zu umgehen, wird der Takt 5.11 nach Durchlaufen aller Gatter in einem Phasenvergleicher 5.2 mit dem Eingangstakt 5.4 verglichen. Bei einer entsprechenden Anzahl von Gattern kann dann der Takt, der alle Gatter durchlief und der Eingangstakt 5.4 wieder gleiche Phase aufweisen. Im Phasenvergleicher 5.2 wird ein Phasenunterschied detektiert und als Regelspannung Gatterlaufzeit 5.9 ausgegeben. Diese steuert die Verzögerungszeit der Gatter. Im einfachsten Fall wird zur Steuerung der Signalverzögerung die Versorgungsspannung der Gatter beeinflusst. Es kann auch eines der beiden Eingangssignale des Phasenvergleichers 5.2 invertiert werden (5.10), in diesem Fall wird nur die Hälfte der Gatter benötigt. Dies verdeutlicht Fig. 6. Nach Durchlauf aller Gatter ist der ursprüngliche Eingangtakt 6.2 um eine halbe Periode verzögert und somit wieder phasengleich dem invertiertem Eingangssignal 5.10. Somit ist eine Taktverzögerung Quarzgenau im Pikosekundenbereich möglich. Um die Anzahl der Schalter 5.8 so gering wie möglich zu halten, kann die Gatterlaufzeit in Blöcken von z.B. 10 bzw. 1 Nanosekunde und 100 bzw. 10 bzw.1 Picosekunden zusammengefasst werden. Auch kann bei einer entsprechenden Aufteilung der Gatter eine direkte binäre Ansteuerung erreicht werden.

Der über die Photodiode 1.10, Vorverstärker 1.11, Signalwegschalter 1.14 und 1.15, Vergleicher 1.16, Regelspannungsverarbeitung 1.2, Phasenregelungen 1.3, 1.4, und 1.5 und Lichtquellen 1.8 und 1.9 geschlossene Regelkreis sorgt selbstständig für eine Verschiebung der Referenz- bzw. Sendephase um genau den Wert der Lichtlaufzeit in der Strecke 1.24 und 1.25. Somit ist eine einfache Bestimmung der Lichtlaufzeit und damit des Abstandes zu einem reflektierenden Objekt 1.26 gegeben.

Es versteht sich von selbst, dass diese Beschreibung verschiedensten Modifikationen, Änderungen und Anpassungen unterworfen werden kann, die sich im Bereich von Äquivalenten zu den anhängenden Ansprüchen bewegen.

**Bezugszeichenliste**

| | | | |
|---|---|---|---|
| 1.1 | Taktgenerator | 2.3 | zweiter Puls Referenzlichtquelle |
| 1.2 | Regelspannungsverarbeitung | 2.4 | Empfangssignal erster Puls Referenzlichtquelle |
| 1.3 | Phasenregelung erster Referenzpuls | | |
| | | 2.5 | Empfangssignal Puls Sendelicht-quelle |
| 1.4 | Phasenregelung zweiter Referenzpuls | | |
| | | 2.6 | Empfangssignal zweiter Puls Refe-renzlichtquelle |
| 1.5 | Phasenregelung Sendepuls | | |
| 1.6 | Amplitudenregelung | 2.7 | Aktivierungszeit Vorverstärker |
| 1.7 | Amplitudenregelung | 2.8 | Empfangssignal mit nicht ausgere-gelter Phase und Amplitude |
| 1.8 | Sendelichtquelle | | |
| 1.9 | Referenzlichtquelle | 2.9 | Empfangssignal mit ausgeregelter Amplitude |
| 1.10 | Photodiode | | |
| 1.11 | Vorverstärker | 2.10 | Empfangssignal mit ausgeregelter |
| 1.12 | Inverter | | Phase und Amplitude |
| 1.13 | Mittelwertbildung | | |
| 1.14 | Signalwegschalter | 3.1 | erster Puls Referenzlichtquelle |
| 1.15 | Signalwegschalter | 3.2 | nicht zeitkorrigierter Puls Sende-lichtquelle |
| 1.16 | Vergleicher | | |
| 1.16a, 1.16b | Eingang | 3.3 | zweiter Puls Referenzlichtquelle |
| 1.16c | Ausgang | 3.4 | Empfangssignal ohne Zeitkorrektur |
| 1.17 | Signalwegschalter | 3.5 | Empfangssignal nach Zeitkorrektur |
| 1.18 | Signalwegschalter | 3.6 | Empfangssignal nach Kompensati-on der Reaktionszeit |
| 1.19 | Vergleicher | | |
| 1.19a, 1.19 b | Eingang | | |
| 1.19c | Ausgang | 4.1 | Anstieg von Fremdlicht |
| 1.20 | Signalwegschalter | 4.2 | Mittelwert erster Referenzpuls |
| 1.21 | Signalwegschalter | 4.3 | Mittelwert Sendepuls |
| 1.22 | Vergleicher | 4.4 | Mittelwert zweiter Referenzpuls |
| 1.23 | Signaladdierer | 5.1 | Gatter |
| 1.24 | Lichtweg von der Sendelichtquelle zum Objekt | 5.2 | Phasenvergleich |
| | | 5.3 | Analog / Digitalkonverter |
| 1.25 | Lichtweg vom Objekt zur Photodiode | 5.4 | Eingangstakt |
| | | 5.5 | Ausgang Taktsignal |
| 1.26 | Reflektierendes Objekt | 5.6 | Eingang Regelsignal |
| 1.27 | Analoge Regelspannung Lichtlaufzeit | 5.7 | Ausgang Digitalwert |
| | | 5.8 | Schalter |
| 1.28 | Digitaler Wert Lichtlaufzeit | 5.9 | Regelspannung Gatterlaufzeit |
| 1.29 | Analoge Regelspannung Reflexion | 5.10 | invertierter Takt |
| 1.30 | Steuersignal Vorverstärker | 5.11 | Takt nach Gatterdurchlauf |
| 1.31 | Integrationsglieder | 6.1 | Signalverzögerung durch Gatterlaufzeit |
| 2.1 | erster Puls Referenzlichtquelle | 6.2 | Eingangstakt |
| 2.2 | Puls Sendelichtquelle | | |

## Patentansprüche

1. Verfahren zur Bestimmung einer Entfernung zu einem rückstrahlenden Objekt mit den Schritten:
- Senden eines von einer Taktsteuerung (1.1) getakteten Sendesignals (2.2) von wenigstens einer Sendelichtquelle (1.8) in wenigstens eine Lichtstrecke (1.24, 1.25) über das Objekt (1.26) an wenigstens einen Empfänger (1.10) zur Erfassung der Veränderung des Sendesignals auf Grund des Objekts (1.26),
- Empfangen des aus der Lichtstrecke (1.24, 1.25) kommenden Sendesignals (2.2) mittels dem wenigstens einen Empfänger (1.10) und Umsetzen des Empfangssignals auf Grund des Sendesignals am Empfänger (1.10) in ein elektrisches Signal (2.5),
- Senden wenigstens eines von der Taktsteuerung (1.1) getakteten Referenzsignals (2.1, 2.3) von wenigstens einer Referenzlichtquelle (1.9) in wenigstens eine weitere Lichtstrecke an den wenigstens einen Empfänger (1.10),
- Empfangen des aus der weiteren Lichtstrecke kommenden Referenzsignals (2.1, 2.3) mittels dem wenigstens einen Empfänger (1.10) und Umsetzen des Empfangssignals auf Grund des Referenzsignals am Empfänger (1.10) in ein elektrisches Referenzsignal (2.4, 2.6),
- Auswerten des elektrischen Signals (2.5) und des elektrischen Referenzsignals (2.4, 2.6) in wenigstens einem Vergleicher (1.19) zur Ermittlung der Entfernung des Objekts (1.26),
- wobei jeweils das über zumindest einen Teilabschnitt des Sendesignals integrierte elektrische Signal (2.5) auf Grund des Sendesignals (2.2) mit wenigstens einem zeitlich angrenzenden, auf Grund der unterschiedlichen Lichtstrecken zeitlich versetzten, über zumindest einen Teilabschnitt des Referenzsignals (2.1, 2.3) integrierten elektrischen Referenzsignal (2.4, 2.6) auf Grund des Referenzsignals (2.1, 2.3) verglichen wird,
- am Ausgang (1.19c) des Vergleichers (1.19) ein Regelwert (1.29) zur Regelung der Amplitudenwerte des Sendesignals (2.2) und/oder des Referenzsignals (2.1, 2.3) erzeugt wird, durch den die Amplitude des elektrischen Signals (2.5) und die Amplitude des elektrischen Referenzsignals (2.4, 2.6) zumindest an den Eingängen (1.19a, 1.19b) des Vergleichers (1.19) im Wesentlichen gleich groß sind, und
- im so ausgeregelten Zustand die Amplitude des beim Taktwechsel auftretenden, der Lichtlaufzeit vom Sendelichtquelle (1.8) zum Objekt (1.26) und zum Empfänger (1.10) entsprechenden Taktwechselsignals zwischen dem elektrischen Signal (2.5) und dem elektrischen Referenzsignal (2.4, 2.6) und/oder dem elektrischen Referenzsignal (2.4, 2.6) und dem elektrischen Signal (2.5) erfasst wird und
- die Amplitude der Taktwechselsignale zueinander oder die Amplitude des Taktwechselsignals im Vergleich zu einem von dieser Lichtlaufzeit unabhängigen Amplitudenwert in einem weiteren Vergleicher (1.16) als Differenzwert (1.27) bestimmt wird und mittels einer Regeleinheit (1.2) ausgelöscht bzw. zumindest minimiert wird.

2. Verfahren zur Bestimmung einer Entfernung zu einem rückstrahlenden Objekt mit den Schritten:
- Senden eines von einer Taktsteuerung (1.1) getakteten Sendesignals (2.2) von wenigstens einer Sendelichtquelle (1.8) in wenigstens eine Lichtstrecke (1.24, 1.25) über das Objekt (1.26) an wenigstens einen Empfänger (1.10) zur Erfassung der Veränderung des Sendesignals auf Grund des Objekts (1.26),
- Empfangen des aus der Lichtstrecke (1.24, 1.25) kommenden Sendesignals (2.2) mittels dem wenigstens einen Empfänger (1.10) und Umsetzen des Empfangssignals auf Grund des Sendesignals am Empfänger (1.10) in ein elektrisches Signal (2.5),
- Übermitteln eines von der Taktsteuerung (1.1) getakteten elektrischen Referenzsignals,
- Auswerten des elektrischen Signals (2.5) und des elektrischen Referenzsignals (2.4, 2.6) in wenigstens einem Vergleicher (1.19) zur Ermittlung der Entfernung des Objekts (1.26),
- wobei jeweils das über zumindest einen Teilabschnitt des Sendesignals integriertes elektrisches Signal (2.5) auf Grund des Sendesignals (2.2) mit dem wenigstens einem zeitlich angrenzenden, auf Grund der Lichtstrecke zeitlich versetzten, über zumindest einen Teilabschnitt des elektrischen Referenzsignals integrierten elektrischen Referenzsignal (2.4, 2.6) verglichen wird,
- am Ausgang (1.19c) des Vergleichers (1.19) ein Regelwert (1.29) zur Regelung der Amplitudenwerte des Sendesignals (2.2) und/oder des elektrischen Referenzsignals erzeugt wird, durch welchen Regelwert die Amplitude des elektrischen Signals (2.5) und die Amplitude des elektrischen Referenzsignals (2.4, 2.6) zumindest an den Eingängen (1.19a, 1.19b) des Vergleichers (1.19) im Wesentlichen gleich groß sind, und
- im so ausgeregelten Zustand die Amplitude des beim Taktwechsel auftretenden, der Lichtlaufzeit vom Sendelichtquelle (1.8) zum Objekt (1.26) und zum Empfänger (1.10) entsprechenden Taktwechselsignals zwischen dem elektrischen Signal (2.5) und dem elektrischen Referenzsignal (2.4, 2.6) und/oder dem elektrischen Referenzsignal (2.4, 2.6) und dem elektrischen Signal (2.5) erfasst wird und
- die Amplitude der Taktwechselsignale zueinander oder die Amplitude des Taktwechselsignals im Vergleich zu einem von dieser Lichtlaufzeit unabhängigen Amplitudenwert in einem weiteren Vergleicher (1.16) als Differenzwert (1.27) bestimmt wird und mittels einer Regeleinheit (1.2) ausgelöscht bzw. zumindest minimiert wird.

3. Verfahren nach Anspruch 1 oder 2, **dadurch gekennzeichnet, dass** das elektrische Referenzsignal am Eingang des Vergleichers (1.19) durch den Mittelwert der elektrischen Referenzsignale von wenigstens zwei pulsförmigen Referenzsignalen (2.4, 2.6) gebildet ist, von denen einer vor und einer nach dem pulsförmigen Sendesignal ausgesandt wird.

4. Verfahren nach einem der vorhergehenden Ansprüche, **dadurch gekennzeichnet, dass** der von dieser Lichtlaufzeit unabhängige Amplitudenwert der Amplitudenwert am Vorverstärker (1.11) ist, wenn das elektrische Signal (2.5) und das elektrische Referenzsignal (2.4, 2.6) an den Eingängen (1.19a, 1.19b) des Vergleichers (1.19) im Wesentlichen gleich groß sind.

5. Verfahren nach einem der vorhergehenden Ansprüche, **dadurch gekennzeichnet, dass** der Differenzwert (1.27) mittels der Regeleinheit (1.2) zur Regelung der Phase von Sendesignal (2.2) und Referenzsignal (2.1, 2.3) verändert wird, bis der Differenzwert (1.27) minimal, vorzugsweise Null wird, wobei die bei minimalem Differenzwert eingeregelte Veränderung der Lichtlaufzeit entspricht.

6. Verfahren nach einem der vorhergehenden Ansprüche bzw. nach einem der Ansprüche 1 oder 3 bis 5, soweit die Referenzlichtquelle (1.9) betroffen ist, **dadurch gekennzeichnet, dass**, wenn das elektrische Signal (2.5) und das elektrische Referenzsignal (2.4, 2.6) an den Eingängen (1.19a, 1.19b) des Vergleichers (1.19) im Wesentlichen gleich groß sind, am Ausgang (1.19c) des Vergleichers (1.19) nur ein eventuelles Verstärkerrauschen ohne taktsynchrone Wechselanteile von Sendelichtquelle (1.8) und/oder Referenzlichtquelle (1.9) anliegt.

7. Verfahren nach einem der vorhergehenden Ansprüche bzw. nach einem der Ansprüche 1 oder 3 bis 6, soweit die Referenzlichtquelle (1.9) betroffen ist, **dadurch gekennzeichnet, dass** zur Kompensation unterschiedlicher Reaktionszeiten zwischen Sendelichtquelle (1.8) und Referenzlichtquelle (1.9) in einem weiteren Vergleicher (1.22) die Abschnitte (A,C,E), die kein Taktwechselsignal enthalten, mit den Abschnitte (B,D), die ein Taktwechselsignal enthalten, miteinander verglichen werden und dass bei einem Unterschied am Ausgang (1.22c) des Vergleichers (1.22) das Sendesignal(2.2) und/oder das Referenzsignal (2.1, 2.3) bzw. das übermittelte elektrische Referenzsignal so lange verlängert oder verkürzt wird, bis der Unterschied (3.5) ausgelöscht wird.

8. Verfahren nach einem der vorhergehenden Ansprüche, **dadurch gekennzeichnet, dass** zur digitalen Signalverzögerung eine mittels Schalter (5.8) abgreifbare Anzahl von Gattern (5.1) vorgesehen ist, wobei der Schalter in Abhängigkeit des Differenzwerts (1.27) ausgewählt wird, wobei ergänzend vorzugsweise die Taktsteuerung (1.1) einen Takt erzeugt und dass der Takt (5.11) nach Durchlaufen aller Gatter (5.1), was der Zeit wenigstens einer halben oder ganzen Taktperiode entspricht, in einem Phasenvergleicher (5.2) mit dem Eingangstakt (5.4) zur Erkennung eines Phasenunterschieds verglichen wird und dass ein eventuell vorhandener Phasenunterschied die Verzögerungszeit der Gatter (5.1) vorzugsweise über eine Versorgungsspannung des Gatters regelt.

9. Vorrichtung zur Bestimmung einer Entfernung zu einem rückstrahlenden Objekt (1.26) mit:
- einer Taktsteuerung (1.1),
- wenigstens einer Sendelichtquelle (1.8) zum Senden eines von der Taktsteuerung (1.1) getakteten Sendesignals (2.2) in wenigstens eine Lichtstrecke (1.24, 1.25) über das Objekt (1.26) an wenigstens einen Empfänger (1.10) zur Erfassung der Veränderung des Sendesignals auf Grund des Objekts (1.26),
- wenigstens einer Referenzlichtquelle (1.9) zum Senden eines von der Taktsteuerung (1.1) getakteten Referenzsignals (2.1, 2.3) in wenigstens eine weitere Lichtstrecke an den wenigstens einen Empfänger (1.10),
- dem wenigstens einen Empfänger (1.10) zum Empfangen des aus der Lichtstrecke (1.24, 1.25) kommenden Sendesignals (2.2) und des aus der weiteren Lichtstrecke kommenden Referenzsignals (2.1, 2.3) und zum Umsetzen des Empfangssignals auf Grund des Sendesignals (2.2) am Empfänger (1.10) in ein elektrisches Signal (2.5) und des Empfangssignals auf Grund des Referenzsignals (2.1, 2.3) am Empfänger (1.10) in ein elektrisches Referenzsignal (2.4, 2.6),
- wenigstens einem Vergleicher (1.19) zum Vergleichen des elektrischen Signals (2.5) und des elektrischen Referenzsignals (2.4, 2.6) zur Erzeugung eines Vergleichswerts (1.29) am Ausgang des Vergleichers (1.19),
- einer Auswerteeinheit zum Auswerten des Vergleichswerts zur Ermittlung einer Entfernung des Objekts (1.26),
- wobei eine Steuereinheit vorgesehen ist, die die Taktsteuerung (1.1) und Signalwegschalter (1.17, 1.18) zur Integration jeweils des über zumindest einen Teilabschnitt des Sendesignals (2.2) vorliegenden elektrischen Signals (2.5) und zur Integration wenigstens eines an das Sendesignal zeitlich angrenzenden, auf Grund der unterschiedlichen Lichtstrecken zeitlich versetzten, elektrischen Referenzsignal (2.4, 2.6) über zumindest einen Teilabschnitt des elektrischen Referenzsignals ansteuert,
- wenigstens eine Regeleinheit (1.6) vorgesehen ist, die zur Regelung der Amplitudenwerte des Sendesignals (2.2) und/oder des Referenzsignals (2.1, 2.3) so verwendet wird, dass die Amplitude des elektrischen Signals (2.5) und die Amplitude des elektrischen Referenzsignals (2.4, 2.6) zumindest an den Eingängen (1.19a, 1.19b) des Vergleichers (1.19) im Wesentlichen gleich groß sind,
- im so ausgeregelten Zustand Mittel zum Erfassen der Amplitude wenigstens eines beim Taktwechsel auftretenden, der Lichtlaufzeit von Sendelichtquelle (1.8) zum Objekt (1.26) und zum Empfänger (1.10) entsprechenden Taktwechselsignals zwischen dem elektrischen Signal (2.5) und dem elektrischen Referenzsignal (2.4, 2.6) und/oder dem elektrischen Referenzsignal (2.4, 2.6) und dem elektrischen Signal (2.5) vorgesehen sind,
- ein weiterer Vergleicher (1.16) zur Bestimmung eines Differenzwerts (1.27) zwischen den Amplituden der Taktwechselsignale zueinander oder der Amplitude des Taktwechselsignals im Vergleich zu einem von dieser Lichtlaufzeit unabhängigen Amplitudenwert vorgesehen ist und
- eine Regeleinheit (1.2) vorgesehen ist, die den Differenzwert (1.27) auslöscht bzw. zumindest minimiert.

10. Vorrichtung zur Bestimmung einer Entfernung zu einem rückstrahlenden Objekt (1.26) mit:
- einer Taktsteuerung (1.1),
- wenigstens einer Sendelichtquelle (1.8) zum Senden eines von der Taktsteuerung (1.1) getakteten Sendesignals (2.2) in wenigstens eine Lichtstrecke (1.24, 1.25) über das Objekt (1.26) an wenigstens einen Empfänger (1.10) zur Erfassung der Veränderung des Sendesignals auf Grund des Objekts (1.26),
- dem wenigstens einen Empfänger (1.10) zum Empfangen des aus der Lichtstrecke (1.24, 1.25) kommenden Sendesignals (2.2) und zum Umsetzen des Empfangssignals auf Grund des Sendesignals (2.2) am Empfänger (1.10) in ein elektrisches Signal (2.5),
- einer Referenzstrecke zum Übermitteln eines elektrischen Referenzsignals (2.4, 2.6),
- wenigstens einem Vergleicher (1.19) zum Vergleichen des elektrischen Signals (2.5) und des elektrischen Referenzsignals (2.4, 2.6) zur Erzeugung eines Vergleichswerts (1.29) am Ausgang des Vergleichers (1.19),
- einer Auswerteeinheit zum Auswerten des Vergleichswerts zur Ermittlung einer Entfernung des Objekts (1.26),
- wobei eine Steuereinheit vorgesehen ist, die die Taktsteuerung (1.1) und Signalwegschalter (1.17, 1.18) zur Integration jeweils des über zumindest einen Teilabschnitt des Sendesignals (2.2) vorliegenden elektrischen Signals (2.5) und zur Integration des wenigstens einen an das Sendesignal zeitlich angrenzenden, zeitlich versetzten, elektrischen Referenzsignal (2.4, 2.6) über zumindest einen Teilabschnitt des elektrischen Referenzsignals ansteuert,
- wenigstens eine Regeleinheit (1.6) vorgesehen ist, die zur Regelung der Amplitudenwerte des Sendesignals (2.2) und/oder des elektrischen Referenzsignals (2.1, 2.3) so verwendet wird, dass die Amplitude des elektrischen Signals (2.5) und die Amplitude des elektrischen Referenzsignals (2.4, 2.6) zumindest an den Eingängen (1.19a, 1.19b) des Vergleichers (1.19) im Wesentlichen gleich groß sind,
- im so ausgeregelten Zustand Mittel zum Erfassen der Amplitude wenigstens eines beim Taktwechsel auftretenden, der Lichtlaufzeit von Sendelichtquelle (1.8) zum Objekt (1.26) und zum Empfänger (1.10) entsprechenden Taktwechselsignals zwischen dem elektrischen Signal (2.5) und dem elektrischen Referenzsignal (2.4, 2.6) und/oder dem elektrischen Referenzsignal (2.4, 2.6) und dem elektrischen Signal (2.5) vorgesehen sind,
- ein weiterer Vergleicher (1.16) zur Bestimmung eines Differenzwerts (1.27) zwischen den Amplituden der Taktwechselsignale zueinander oder der Amplitude des Taktwechselsignals im Vergleich zu einem von dieser Lichtlaufzeit unabhängigen Amplitudenwert vorgesehen ist und
- eine Regeleinheit (1.2) vorgesehen ist, die den Differenzwert (1.27) auslöscht bzw. zumindest minimiert.

11. Vorrichtung nach Anspruch 9 oder 10, **dadurch gekennzeichnet, dass** ein Mittelwertbilder zur Bildung eines Mittelwerts der elektrischen Referenzsignale (2.4, 2.6) von wenigstens zwei pulsförmigen Referenzsignalen (2.1, 2.3) am einen Eingang (1.19b) des Vergleichers (1.19) vorgesehen ist, von welchen Referenzsignalen einer vor und einer nach dem pulsförmigen Sendesignal (2.2) ausgesandt wird.

12. Vorrichtung nach Anspruch 11, **dadurch gekennzeichnet, dass** der von dieser Lichtlaufzeit unabhängige Amplitudenwert der Amplitudenwert am Vorverstärker (1.11) ist, wenn das elektrische Signal (2.5) und das elektrische Referenzsignal (2.4, 2.6) an den Eingängen (1.19a, 1.19b) des Vergleichers (1.19) im Wesentlichen gleich groß sind..

13. Vorrichtung nach einem der Ansprüche 9 bis 12, **dadurch gekennzeichnet, dass** die Regeleinheit (1.2) zur Regelung der Phase von Sendesignal (2.2) und Referenzsignal (2.1, 2.3) durch Beeinflussung und Minimierung des Differenzwerts (1.27) vorzugsweise auf Null vorgesehen ist, wobei die bei minimalem Differenzwert eingeregelte Verzögerung der Lichtlaufzeit entspricht.

14. Vorrichtung nach einem der Ansprüche 9 bis 13, **dadurch gekennzeichnet, dass** zur Kompensation unterschiedlicher Reaktionszeiten zwischen Sendelichtquelle (1.8) und Referenzlichtquelle (1.9) ein weiterer Vergleicher (1.22) vorgesehen ist, der Abschnitte (A,C,E), die kein Taktwechselsignal enthalten, mit Abschnitten (B,D), die ein Taktwechselsignal enthalten, vergleicht und
dass eine Regeleinheit (1.2) vorgesehen ist, die bei einem Unterschied am Ausgang (1.22c) des weiteren Vergleichers (1.22) das Sendesignal (2.2) und/oder das Referenzsignal (2.1, 2.3) bzw. das übermittelte elektrische Referenzsignal so lange verlängert oder verkürzt wird, bis der Unterschied (3.5) ausgelöscht wird.

15. Vorrichtung nach einem der Ansprüche 9 bis 14, **dadurch gekennzeichnet, dass** zur digitalen Signalverzögerung eine mittels Schalter (5.8) abgreifbare Anzahl von Gattern (5.1) vorgesehen ist, wobei der Schalter in Abhängigkeit des Differenzwerts (1.27) ausgewählt wird, wobei vorzugsweise ein Phasenvergleicher (5.2) vorgesehen ist, der den Eingangstakt (5.4) der Taktsteuerung (1.1) mit dem Takt (5.11), der nach Durchlaufen aller Gatter (5.1) vorliegt und der Zeit wenigstens einer halben oder ganzen Taktperiode entspricht, auf einen Phasenunterschied vergleicht und dass eine Regeleinheit (1.2) vorgesehen ist, die bei einem eventuell vorhandenen Phasenunterschied die Verzögerungszeit der Gatter (5.1) vorzugsweise über eine Versorgungsspannung des Gatters regelt.

## Claims

1. Method for determining a distance to a retroreflective object with the steps:
- transmitting a transmitted signal (2.2) clocked by a clock control (1.1) from at least one transmitting light source (1.8) into at least one light path (1.24, 1.25) via the object (1.26) to at least one receiver (1.10) to detect the change in the transmitted signal resulting from the object (1.26),
- receiving the transmitted signal (2.2) coming from the light path (1.24, 1.25) by means of the at least one receiver (1.10) and converting the received signal resulting from the transmitted signal at the receiver (1.10) into an electrical signal (2.5),
- transmitting at least one reference signal (2.1, 2.3) clocked by the clock control (1.1) from at least one reference light source (1.9) into at least one further light path to the at least one receiver (1.10),
- receiving the reference signal (2.1, 2.3) coming from the further light path by means of the at least one receiver (1.10) and converting the received signal resulting from the reference signal at the receiver (1.10) into an electrical reference signal (2.4, 2.6),
- evaluating the electrical signal (2.5) and the electrical reference signal (2.4, 2.6) in at least one comparator (1.19) to determine the distance to the object (1.26),
- wherein the electrical signal (2.5) resulting from the transmitted signal (2.2) integrated over at least a sub-section of the transmitted signal is respectively compared with at least one electric reference signal (2.4, 2.6) resulting from the reference signal (2.1, 2.3), which at least one electric reference signal is adjacent in time, staggered in time due to the differing light paths and integrated over at least one sub-section of the reference signal,
- at the output (1.19c) of the comparator (1.19) a control value (1.29) is generated to regulate the amplitude values of the transmitted signal (2.2) and/or the reference signal (2.1, 2.3), as a result of which control value the amplitude of the electrical signal (2.5) and the amplitude of the electrical reference signal (2.4, 2.6) are substantially equal in magnitude at least at the inputs (1.19a, 1.19b) of the comparator (1.19), and
- in the thus stabilised state the amplitude of the clock pulse change signal, which occurs during the clock pulse change and corresponds to the light transit time from the transmitting light source (1.8) to the object (1.26) and to the receiver (1.10), between the electrical signal (2.5) and the electrical reference signal (2.4, 2.6) and/or the electrical reference signal (2.4, 2.6) and the electrical signal (2.5) is determined, and
- the amplitude of the clock pulse change signals in relation to one another or the amplitude of the clock pulse change signal compared to an amplitude independent of this light transit time is determined as difference value (1.27) in a further comparator (1.16) and eliminated or at least minimised by means of a regulator (1.2).

2. Method for determining a distance to a retroreflective object with the steps:
- transmitting a transmitted signal (2.2) clocked by a clock control (1.1) from at least one transmitting light source (1.8) into at least one light path (1.24, 1.25) via the object (1.26) to at least one receiver (1.10) to detect the change in the transmitted signal resulting from the object (1.26),
- receiving the transmitted signal (2.2) coming from the light path (1.24, 1.25) by means of the at least one receiver (1.10) and converting the received signal resulting from the transmitted signal at the receiver (1.10) into an electrical signal (2.5),
- forwarding an electrical reference signal clocked by the clock control (1.1),
- evaluating the electrical signal (2.5) and the electrical reference signal (2.4, 2.6) in at least one comparator (1.19) to determine the distance to the object (1.26),
- wherein the electrical signal (2.5) resulting from the transmitted signal (2.2) integrated over at least a sub-section of the transmitted signal is respectively compared with at least one electric reference signal (2.4, 2.6), which is adjacent in time, staggered in time due to the light path and integrated over at least one sub-section of the electrical reference signal,
- at the output (1.19c) of the comparator (1.19) a control value (1.29) is generated to regulate the amplitude values of the transmitted signal (2.2) and/or the electrical reference signal, as a result of which control value the amplitude of the electrical signal (2.5) and the amplitude of the electrical reference signal (2.4, 2.6) are substantially equal in magnitude at least at the inputs (1.19a, 1.19b) of the comparator (1.19), and
- in the thus stabilised state the amplitude of the clock pulse change signal, which occurs during the clock pulse change and corresponds to the light transit time from the transmitting light source (1.8) to the object (1.26) and to the receiver (1.10), between the electrical signal (2.5) and the electrical reference signal (2.4, 2.6) and/or the electrical reference signal (2.4, 2.6) and the electrical signal (2.5) is determined, and
- the amplitude of the clock pulse change signals in relation to one another or the amplitude of the clock pulse change signal compared to an amplitude independent of this light transit time is determined as difference value (1.27) in a further comparator (1.16) and eliminated or at least minimised by means of a regulator (1.2).

3. Method according to claim 1 or 2, **characterised in that** the electrical reference signal at the input of the comparator (1.19) is formed by the mean value of the electrical reference signals of at least two reference signals (2.4, 2.6) in pulse form, of which one is emitted before and one is emitted after the transmitted signal in pulse form.

4. Method according to one of the preceding claims, **characterised in that** the amplitude value independent of this light transit time is the amplitude value at the preamplifier (1.11) when the electrical signal (2.5) and the electrical reference signal (2.4, 2.6) at the inputs (1.19a, 19b) of the comparator (1.19) are substantially equal in magnitude.

5. Method according to one of the preceding claims, **characterised in that** the difference value (1.27) is changed by means of the regulator (1.2) to regulate the phase of the transmitted signal (2.2) and the reference signal (2.1, 2.3) until the difference value (1.27) is minimal, preferably zero, wherein the adjusted change in the case of a minimal difference value corresponds to the light transit time.

6. Method according to one of the preceding claims, respectively, according to one of the claims 1 or 3 to 5, as far as the reference light source (1.9) is concerned, **characterised in that**, if the electrical signal (2.5) and the electrical reference signal (2.4, 2.6) at the inputs (1.19a, 1.19b) of the comparator (1.19) are substantially equal in magnitude, only amplifier noise without clock-synchronous alternating components from the transmitting light source (1.8) and/or reference light source (1.9) is possibly present at the output (1.19c) of the comparator (1.19).

7. Method according to one of the preceding claims, , respectively, according to one of the claims 1 or 3 to 6, as far as the reference light source (1.9) is concerned, **characterised in that** to compensate different reaction times between the transmitting light source (1.8) and the reference light source (1.9) the sections (A,C,E), which contain no clock pulse change signal, are compared with the sections (B,D), which contain a clock pulse change signal, with one another in a further comparator (1.22), and that in the case of a difference at the output (1.22c) of the comparator (1.22) the transmitted signal (2.2) and/or the reference signal (2.1, 2.3) or the forwarded electrical reference signal are lengthened or shortened until the difference (3.5) is eliminated.

8. Method according to one of the preceding claims, **characterised in that** for digital signal delay a number of gates (5.1) tappable by switches (5.8) are provided, wherein the switch is selected in dependence on the difference value (1.27), wherein additionally preferably the clock control (1.1) generates a clock pulse, and after passing through all the gates (5.1), which corresponds to the time of at least a half or a whole clock pulse period, the clock pulse (5.11) is compared with the input clock pulse (5.4) in a phase comparator (5.2) to identify a phase difference, and that any phase difference present regulates the delay time of the gates (5.1) preferably by means of a supply voltage of the gate.

9. Device for determining a distance to a retroreflective object (1.26) with:
- a clock control (1.1),
- at least one transmitting light source (1.8) for transmitting a transmitted signal (2.2) clocked by the clock control (1.1) into at least one light path (1.24, 1.25) via the object (1.26) to at least one receiver (1.10) to determine the change in the transmitted signal resulting from the object (1.26),
- at least one reference light source (1.9) for transmitting a reference signal (2.1, 2.3) clocked by the clock control (1.1) into at least one further light path to the at least one receiver (1.10),
- the at least one receiver (1.10) for receiving the transmitted signal (2.2) coming from the light path (1.24, 1.25) and the reference signal (2.1, 2.3) coming from the further light path and for converting the received signal resulting from the transmitted signal (2.2) at the receiver (1.10) into an electrical signal (2.5) and the received signal resulting from the reference signal (2.1, 2.3) at the receiver (1.10) into an electrical reference signal (2.4, 2.6),
- at least one comparator (1.19) for comparing the electrical signal (2.5) and the electrical reference signal (2.4, 2.6) to generate a comparative value (1.29) at the output of the comparator (1.19),
- an evaluation unit for evaluating the comparative value to determine a distance to the object (1.26),
- wherein a control unit is provided, which controls the clock control (1.1) and signal path switches (1.17, 1.18) to respectively integrate the electrical signal (2.5) present over at least one sub-section of the transmitted signal (2.2) and to integrate the at least one electrical reference signal (2.4, 2.6), which is adjacent in time to the transmitted signal, and is staggered in time due to the differing light paths and integrated over at least one sub-section of the electrical reference signal,
- at least one regulator (1.6) is provided, which is used to regulate the amplitude values of the transmitted signal (2.2) and/or the reference signal (2.1, 2.3) so that the amplitude of the electrical signal (2.5) and the amplitude of the electrical reference signal (2.4, 2.6) are substantially equal in magnitude at least at the inputs (1.19a, 1.19b) of the comparator (1.19),
- in the thus stabilised state means for detecting the amplitude of at least one clock pulse change signal are provided, which occurs during the clock pulse change and corresponds to the light transit time from the transmitting light source (1.8) to the object (1.26) and to the receiver (1.10), between the electrical signal (2.5) and the electrical reference signal (2.4, 2.6) and/or the electrical reference signal (2.4, 2.6) and the electrical signal (2.5),
- a further comparator (1.16) is provided to determine a difference value (1.27) between the amplitudes of the clock pulse change signals in relation to one another or the amplitude of the clock pulse change signal compared to an amplitude value independent of this light transit time, and
- a regulator (1.2) is provided, which eliminates or at least minimises the difference value (1.27).

10. Device for determining a distance to a retroreflective object (1.26) with:
- a clock control (1.1),
- at least one transmitting light source (1.8) for transmitting a transmitted signal (2.2) clocked by the clock control (1.1) into at least one light path (1.24, 1.25) via the object (1.26) to at least one receiver (1.10) to determine the change in the transmitted signal resulting from the object (1.26),
- the at least one receiver (1.10) for receiving the transmitted signal (2.2) coming from the light path (1.24, 1.25) and for converting the received signal as a result of the transmitted signal (2.2) at the receiver (1.10) into an electrical signal (2.5),
- a reference path for forwarding an electrical reference signal (2.4, 2.6),
- at least one comparator (1.19) for comparing the electrical signal (2.5) and the electrical reference signal (2.4, 2.6) to generate a comparative value (1.29) at the output of the comparator (1.19),
- an evaluation unit for evaluating the comparative value to determine a distance to the object (1.26),
- wherein a control unit is provided, which controls the clock control (1.1) and signal path switches (1.17, 1.18) to respectively integrate an electrical signal (2.5) present over at least one sub-section of the transmitted signal (2.2) and to integrate the at least one electrical reference signal (2.4, 2.6), which is adjacent in time to the transmitted signal, staggered in time and integrated over at least one sub-section of the electrical reference signal,
- at least one regulator (1.6) is provided, which is used to regulate the amplitude values of the transmitted signal (2.2) and/or the electrical reference signal (2.1, 2.3) so that the amplitude of the electrical signal (2.5) and the amplitude of the electrical reference signal (2.4, 2.6) are substantially equal in magnitude at least at the inputs (1.19a, 1.19b) of the comparator (1.19),
- in the thus stabilised state means for detecting the amplitude of at least one clock pulse change signal are provided, which occurs during the clock pulse change and corresponds to the light transit time from the transmitting light source (1.8) to the object (1.26) and to the receiver (1.10), between the electrical signal (2.5) and the electrical reference signal (2.4, 2.6) and/or the electrical reference signal (2.4, 2.6) and the electrical signal (2.5),
- a further comparator (1.16) is provided to determine a difference value (1.27) between the amplitudes of the clock pulse change signals in relation to one another or the amplitude of the clock pulse change signal compared to an amplitude value independent of this light transit time, and
- a regulator (1.2) is provided, which eliminates or at least minimises the difference value (1.27).

11. Device according to claim 9 or 10, **characterised in that** a mean value former is provided to form a mean value of the electrical reference signals (2.4, 2.6) resulting from at least two reference signals (2.1, 2.3) in pulse form at an input (1.19b) of the comparator (1.19), of which reference signals one is emitted before and one is emitted after the transmitted signal (2.2) in pulse form.

12. Device according to claim 11, **characterised in that** the amplitude value independent of this light transit time is the amplitude value at the preamplifier (1.11) when the electrical signal (2.5) and the electrical reference signal (2.4, 2.6) at the inputs (1.19a, 1.19b) of the comparator (1.19) are substantially equal in magnitude.

13. Device according to one of claims 9 to 12, **characterised in that** the regulator (1.2) is provided to regulate the phase of the transmitted signal (2.2) and the reference signal (2.1, 2.3) by influencing and minimising the difference value (1.27) preferably to zero, wherein the delay adjusted in the case of a minimal difference value corresponds to the light transit time.

14. Device according to one of claims 9 to 13, **characterised in that** a further comparator (1.22) is provided to compensate different reaction times between the transmitting light source (1.8) and the reference light source (1.9), which comparator compares sections (A,C,E), which contain no clock pulse change signal, with sections (B,D), which contain a clock pulse change signal, and
that a regulator (1.2) is provided, which lengthens or shortens the transmitted signal (2.2) and/or the reference signal (2.1, 2.3) or the forwarded electrical reference signal in the case of a difference at the output (1.22c) of the further comparator (1.22) until the difference (3.5) is eliminated.

15. Device according to one of claims 9 to 14, **characterised in that** for digital signal delay a number of gates (5.1) tappable by means of switches (5.8) are provided, wherein the switch is selected in dependence on the difference value (1.27), wherein preferably a phase comparator (5.2) is provided, which compares the input clock pulse (5.4) of the clock control (1.1) with the clock pulse (5.11), which is present after passing through all the gates (5.1) and corresponds to the time of at least a half or a whole clock pulse period, to determine a phase difference, and that a regulator (1.2) is provided, which if any phase difference is present regulates the delay time of the gates (5.1) preferably by means of a supply voltage of the gate.

## Revendications

1. Procédé de détermination de l'éloignement par rapport à un objet rétro-réfléchissant, comportant les étapes suivantes :
- émission d'un signal d'un signal d'émission (2.2) cadencé par un dispositif de cadençage (1.1) depuis au moins une source de lumière d'émission (1.8) dans au moins un trajet lumineux (1.24, 1.25) par l'intermédiaire de l'objet (1.26) vers au moins un récepteur (1.10) pour la détermination du changement du signal d'émission dû à l'objet (1.26),
- réception du signal d'émission (2.2) provenant du trajet lumineux (1.24, 1.25) au moyen du ou des récepteur(s) (1.10) et transformation du signal reçu par le récepteur (1.10) en raison du signal d'émission en un signal électrique (2.5),
- émission d'au moins un signal de référence (2.1, 2.3) cadencé par le dispositif de cadençage (1.1) depuis au moins une source de lumière de référence (1.9) dans au moins un autre trajet lumineux vers le ou les récepteur(s) (1.10),
- réception du signal de référence (2.1, 2.3) provenant de l'autre trajet lumineux au moyen du ou des récepteur(s) (1.10) et transformation du signal reçu en raison du signal de référence par le récepteur (1.10) en un signal de référence électrique (2.4, 2.6),
- traitement du signal électrique (2.5) et du signal de référence électrique (2.4, 2.6) dans au moins un comparateur (1.19) pour la détermination de l'éloignement de l'objet (1.26),
- le signal électrique (2.5) intégré sur au moins un laps de temps du signal d'émission en raison du signal d'émission (2.2) étant à chaque fois comparé avec au moins un signal de référence électrique (2.4, 2.6) intégré sur au moins un laps de temps du signal de référence (2.1, 2.3) voisin dans le temps, décalé dans le temps en raison des trajets lumineux différents, dû au signal de référence (2.1, 2.3),
- à la sortie (1.19c) du comparateur (1.19) une valeur de réglage (1.29) pour le réglage des valeurs d'amplitude du signal d'émission (2.2) et/ou du signal de référence (2.1, 2.3) est produite, grâce à laquelle l'amplitude du signal électrique (2.5) et l'amplitude du signal de référence électrique (2.4, 2.6) sont sensiblement égales, du moins aux entrées (1.19a, 1.19b) du comparateur (1.19), et
- à l'état ainsi réglé, l'amplitude du signal de changement de cadence intervenant lors du changement de cadence, correspondant à la période lumineuse depuis la source de lumière d'émission (1.8) jusqu'à l'objet (1.26) et jusqu'au récepteur (1.10), entre le signal électrique (2.5) et le signal de référence électrique (2.4, 2.6) et/ou le signal de référence électrique (2.4, 2.6) et le signal électrique (2.5) est mesurée et
- l'amplitude des signaux de changement de cadence les uns par rapports aux autres ou l'amplitude du signal de changement de cadence par rapport à une valeur d'amplitude indépendante de cette période lumineuse est déterminée dans un autre comparateur (1.16) en tant que valeur différentielle (1.27) et annulée ou du moins minimisée au moyen d'une unité de réglage (1.2).

2. Procédé de détermination de l'éloignement par rapport à un objet rétro-réfléchissant, comportant les étapes suivantes :
- émission d'un signal d'émission (2.2) cadencé par un dispositif de cadençage (1.1) depuis au moins une source de lumière d'émission (1.8) dans au moins un trajet lumineux (1.24, 1.25) par l'intermédiaire de l'objet (1.26) vers au moins un récepteur (1.10) pour la mesure du changement du signal d'émission dû à l'objet (1.26),
- réception du signal d'émission (2.2) provenant du trajet lumineux (1.24, 1.25) au moyen du ou des récepteur(s) (1.10) et transformation du signal reçu par le récepteur (1.10) en raison du signal d'émission en un signal électrique (2.5),
- transmission d'un signal de référence électrique cadencé par le dispositif de cadençage (1.1),
- traitement du signal électrique (2.5) et du signal de référence électrique (2.4, 2.6) dans au moins un comparateur (1.19) pour la détermination de l'éloignement de l'objet (1.26),
- le signal électrique (2.5) intégré sur au moins un laps de temps du signal d'émission en raison du signal reçu (2.2) étant à chaque fois comparé avec le ou les signal/aux de référence électrique(s) (2.4, 2.6) intégré(s) sur au moins un laps de temps du signal de référence électrique, voisin(s) dans le temps, décalé(s) dans le temps en raison du trajet lumineux,
- à la sortie (1.19c) du comparateur (1.19) une valeur de réglage (1.19) est produite pour le réglage des valeurs d'amplitude du signal d'émission (2.2) et/ou du signal de référence électrique, valeur de réglage (1.29) grâce à laquelle l'amplitude du signal électrique (2.5) et l'amplitude du signal de référence électrique (2.4, 2.6) sont sensiblement égales, du moins aux entrées (1.19a, 1.19b) du comparateur (1.19) et
- à l'état ainsi réglé, l'amplitude du signal de changement de cadence, intervenant lors du changement de cadence, correspondant à la période lumineuse depuis la source de lumière d'émission (1.8) jusqu'à l'objet (1.26) et jusqu'au récepteur (1.10), entre le signal le signal électrique (2.5) et le signal de référence électrique (2.4, 2.6) et/ou le signal de référence électrique (2.4, 2.6) et le signal électrique (2.5) est mesuré et
- l'amplitude des signaux de changement de cadence les uns par rapport aux autres ou l'amplitude du signal de changement de cadence par rapport à une valeur d'amplitude indépendante de cette période lumineuse est déterminée dans un autre comparateur (1.16) en tant que valeur différentielle (1.27) et annulée ou du moins minimisée au moyen d'une unité de réglage (1.2).

3. Procédé selon la revendication 1 ou 2, **caractérisé en ce que** le signal de référence électrique à l'entrée du comparateur (1.19) est formé par la valeur moyenne des signaux de référence électriques d'au moins deux signaux de référence (2.4, 2.6) en forme de pulsations dont l'un est émis avant le signal d'émission en forme de pulsations et l'autre après.

4. Procédé selon l'une des revendications précédentes, **caractérisé en ce que** la valeur d'amplitude indépendante de cette période lumineuse est la valeur d'amplitude au niveau du préamplificateur (1.11), lorsque le signal électrique (2.5) et le signal de référence électrique (2.4, 2.6) sont sensiblement égaux aux entrées (1.19a, 1.19b) du comparateur (1.19).

5. Procédé selon l'une des revendications précédentes, **caractérisé en ce que** la valeur différentielle (1.27) est modifiée au moyen de l'unité de réglage (1.2) pour le réglage de la phase du signal d'émission (2.2) et du signal de référence (2.1, 2.3), jusqu'à ce que la valeur différentielle (1.27) devienne minimale, de préférence nulle, la modification réglée en cas de valeur différentielle minimale correspondant à la période lumineuse.

6. Procédé selon l'une des revendications précédentes ou selon l'une des revendications 1 ou 3 à 5, dans la mesure où la source de lumière de référence (1.19) est concernée, **caractérisé en ce que**, lorsque le signal électrique (2.5) et le signal de référence électrique (2.4, 2.6) sont sensiblement égaux aux entrées (1.19a, 1.19b) du comparateur (1.19), à la sortie (1.19c) du comparateur (1.19) est connectée uniquement un éventuel bruit d'amplification sans composantes de changement de la source de lumière d'émission (1.8) et/ou de la source de lumière de référence (1.9) synchronisées avec la cadence.

7. Procédé selon l'une des revendications précédentes ou selon l'une des revendications 1 ou 3 à 6, dans la mesure ou la source de lumière de référence (1.9) est concernée, **caractérisé en ce que** pour la compensation des temps de réaction différents entre la source de lumière d'émission (1.8) et la source de lumière de référence (1.9) les intervalles (A, C, E), qui ne contiennent aucun signal de changement de cadence, sont comparés avec les intervalles (B, D) qui contiennent un signal de changement de cadence dans un autre comparateur (1.22) et **en ce qu'**en cas de différence à la sortie (1.22c) du comparateur (1.22), le signal d'émission (2.2) et/ou le signal de référence (2.1, 2.3) ou le signal de référence électrique transmis sont prolongés ou raccourcis jusqu'à ce que la différence (3.5) soit annulée.

8. Procédé selon l'une des revendications précédentes, **caractérisé en ce qu'**un choix de portes logiques (5.1) possible grâce à un commutateur (5.8) est prévu pour un retardement de signal numérique, le commutateur étant choisi en fonction de la valeur différentielle (1.27), le dispositif de cadençage (1.1) produisant de préférence une cadence pour compléter, et **en ce que** la cadence (5.11), après passage par toutes les portes logiques (5.1), ce qui correspond à la durée d'au moins une demie ou d'une période complète de cadençage, est comparée dans un comparateur de phases (5.2) avec la cadence d'entrée (5.4) pour la reconnaissance d'une différence de phase et **en ce qu'**une éventuelle différence de phase existante règle le temps de retard des portes logiques (5.1) de préférence au moyen d'une tension d'alimentation.

9. Dispositif pour la détermination de l'éloignement par rapport à un objet rétro-réfléchissant (1.26) comportant :
- un dispositif de cadençage (1.1),
- au moins une source de lumière d'émission (1.8) pour l'émission d'un signal d'émission (2.2) cadencé par le dispositif de cadençage (1.1) dans au moins un trajet lumineux (1.24, 1.25) par l'intermédiaire de l'objet (1.26) vers au moins un récepteur (1.10) pour mesurer le changement du signal d'émission dû à l'objet (1.26),
- au moins une source de lumière de référence (1.9) pour l'émission d'un signal de référence (2.1, 2,3) cadencé par le dispositif de cadençage dans au moins un autre trajet lumineux vers le ou les récepteur(s) (1.10),
- le ou les récepteur(s) (1.10) pour la réception du signal d'émission (2.2) provenant du trajet lumineux (1.24, 1.25) et du signal de référence (2.1, 2.3) provenant de l'autre trajet lumineux et pour la transformation du signal reçu en raison du signal d'émission (2.2) par le récepteur (1.10) en un signal électrique (2.5) et du signal reçu en raison du signal de référence (2.1, 2.3) par le récepteur (1.10) en un signal de référence électrique (2.4, 2.6),
- au moins un comparateur (1.19) pour comparer le signal électrique (2.5) et le signal de référence électrique (2.4, 2.6) pour la production d'une valeur de comparaison (1.29) à la sortie du comparateur (1.19),
- une unité de traitement pour le traitement de la valeur de comparaison pour la détermination de l'éloignement de l'objet (1.26),
- une unité de commande étant prévue, laquelle commande l'unité de cadençage (1.1) et le commutateur de chemin de signal (1.17, 1.18) pour l'intégration à la fois du signal électrique (2.5) présent sur au moins un laps de temps du signal d'émission (2.2) et pour l'intégration d'au moins un signal de référence électrique (2.4, 2.6) voisin dans le temps, décalé dans le temps en raison des trajet lumineux différents, sur au moins un laps de temps du signal de référence électrique,
- au moins une unité de réglage (1.6) est prévue, laquelle est utilisée pour le réglage des valeurs d'amplitude du signal d'émission (2.2) et/ou du signal de référence (2.1, 2.3) de sorte que l'amplitude du signal électrique (2.5) et l'amplitude du signal de référence électrique (2.4, 2.6) sont sensiblement égales, du moins aux entrées (1.19a, 1.19b) du comparateur (1.19),
- à l'état ainsi réglé, des moyens sont prévus pour la détermination de l'amplitude d'au moins un signal de changement de cadence intervenant lors d'un changement de cadence, correspondant à la période lumineuse depuis la source de lumière d'émission (1.8) jusqu'à l'objet (1.26) et jusqu'au récepteur (1.10), entre le signal électrique (2.5) et le signal de référence électrique (2.4, 2.6) et/ou le signal de référence électrique (2.4, 2.6) et le signal électrique (2.5),
- un autre comparateur (1.16) est prévu pour la détermination d'une valeur différentielle (1.27) entre les amplitudes des signaux de changement de cadence les unes par rapport aux autres ou de l'amplitude du signal de changement de cadence par rapport à une valeur d'amplitude indépendante de cette période lumineuse, et
- une unité de réglage (1.2) est prévue, pour annuler ou du moins minimiser la valeur différentielle (1.27).

10. Dispositif pour la détermination de l'éloignement par rapport à un objet rétro-réfléchissant (1.26), comportant :
- une unité de cadençage (1.1),
- au moins une source de lumière d'émission (1.8) pour l'émission d'un signal d'émission (2.2) cadencé par l'unité de cadençage (1.1) dans au moins un trajet lumineux (1.24, 1.25) par l'intermédiaire de l'objet (1.26) vers au moins un récepteur (1.10) pour la mesure du changement du signal d'émission dû à l'objet (1.26),
- le ou les récepteur(s) (1.10) pour la réception du signal d'émission (2.2) provenant du trajet lumineux (1.24, 1.25) et pour la transformation du signal reçu en raison du signal d'émission (2.2) par le récepteur (1.10) en un signal électrique (2.5),
- un trajet de référence pour la transmission d'un signal de référence électrique (2.4, 2.6),
- au moins un comparateur (1.19) pour la comparaison du signal électrique (2.5) et du signal de référence électrique (2.4, 2.6) pour la production d'une valeur de comparaison (1.29) à la sortie du comparateur (1.19),
- une unité de traitement pour traiter la valeur de comparaison pour la détermination de l'éloignement de l'objet (1.26),
- une unité de commande étant prévue, laquelle commande l'unité de cadençage (1.1) et le commutateur de chemin de signal (1.17, 1.18) pour l'intégration à la fois du signal électrique existant, sur au moins un laps de temps du signal d'émission (2.2) et pour l'intégration de ou des signal(aux) de référence électrique(s) (2.4, 2.6), voisin(s) dans le temps du signal d'émission, décalé(s) dans le temps, sur au moins un laps de temps du signal de référence électrique,
- au moins une unité de réglage (1.6) est prévue, laquelle est utilisée pour le réglage des valeurs d'amplitude du signal d'émission (2.2) et/ou du signal de référence électrique (2.1, 2.3) de sorte que l'amplitude du signal électrique (2.5) et l'amplitude du signal de référence électrique (2.4, 2.6) sont sensiblement égales, du moins aux entrées (1.19a, 1.19b) du comparateur (1.19),
- à l'état ainsi réglé, des moyens pour la mesure de l'amplitude d'au moins signal de changement de cadence entre le signal électrique (2.5) et le signal de référence électrique (2.4, 2.6) et/ou entre le signal de référence électrique (2.4, 2.6) et le signal électrique (2.5), intervenant lors du changement de cadence, correspondant à la période lumineuse de la source de lumière d'émission (1.8) jusqu'à l'objet (1.26) et jusqu'au récepteur (1.10),
- un autre comparateur (1.16) est prévu pour la détermination d'une valeur différentielle (1.27) entre les amplitudes des signaux de changement de cadence entre eux ou de l'amplitude du signal de changement de cadence par rapport à une valeur d'amplitude indépendante de cette période lumineuse, et
- une unité de réglage est prévue, laquelle annule ou du moins minimise la valeur différentielle (1.27).

11. Dispositif selon la revendication 9 ou 10, **caractérisé en ce qu'**un calculateur de valeur moyenne est prévu pour le calcul d'une valeur moyenne des signaux de référence électriques (2.4, 2.6) d'au moins deux signaux de référence en forme de pulsations (2.1, 2.3) à une entrée (1.19b) du comparateur (1.19), l'un des signaux de référence étant émis avant le signal de référence en forme de pulsations (2.2) et l'autre après.

12. Dispositif selon la revendication 11, **caractérisé en ce que** la valeur d'amplitude indépendante de cette période lumineuse est la valeur d'amplitude au niveau du préamplificateur (1.11), lorsque le signal électrique (2.5) et le signal de référence électrique (2.4, 2.6) sont sensiblement égaux aux entrées (1.19a, 1.19b) du comparateur (1.19).

13. Dispositif selon l'une des revendications 9 à 12, **caractérisé en ce que** l'unité de réglage (1.2) pour le réglage de la phase du signal d'émission (2.2) et du signal de référence (2.1, 2.3) est prévue par influence et minimisation de la valeur différentielle (1.27), de préférence par mise à zéro, le retard réglé en cas de valeur différentielle minimale correspondant à la période lumineuse.

14. Dispositif selon l'une des revendications 9 à 13, **caractérisé en ce que** pour la compensation des différents temps de réaction entre la source de lumière d'émission (1.8) et la source de lumière de référence (1.9) une autre comparateur (1.22) est prévu, lequel compare des intervalles (A,C,E) qui ne contiennent pas de signal de changement de cadence avec des intervalles (B,D) qui contiennent un signal de changement de cadence, et
**en ce qu'**une unité de réglage (1.2) est prévue, laquelle prolonge ou raccourcit, en cas de différence à la sortie (1.22) de l'autre comparateur (1.22) le signal d'émission (2.2) et/ou le signal de référence (2.1, 2.3) ou le signal de référence électrique transmis, jusqu'à ce que la différence (3.5) soit annulée.

15. Dispositif selon l'une des revendications 9 à 14, **caractérisé en ce que**, pour le retardement de signal numérique, un choix de portes logiques (5.1) possible grâce à un commutateur (5.8) est prévu, le commutateur étant choisi en fonction de la valeur différentielle (1.27), un comparateur de phase étant de préférence prévu, lequel compare, sur une différence de phase, la cadence d'entrée (5.4) du dispositif de cadençage (1.1) avec la cadence (5.11) qui règne après passage de toutes les portes logiques (5.1) et correspond à la durée d'au moins une demie ou une période entière de cadençage, et **en ce qu'**une unité de réglage (1.2) est prévue, laquelle règle en cas d'existence d'une éventuelle différence de phase, le temps de retard des portes logiques (5.1) de préférence au moyen d'une tension d'alimentation des portes logiques.
